# FASCICULE DE BREVET EUROPEEN

(11) **EP 4 217 250 B1**
(45) Date de publication et mention de la délivrance du brevet: **26.11.2025**
(21) Numéro de dépôt: 21749850.0
(22) Date de dépôt: 28.07.2021
(51) Int. Cl.: B60W 60/00, B60W 30/095

(54) **SYSTÈME D'AIDE À LA CONDUITE D'UN VÉHICULE**
HILFSSYSTEM ZUM FAHREN EINES FAHRZEUGS
SYSTEM FOR ASSISTING WITH DRIVING A VEHICLE

(30) Priorité: 22.09.2020 FR 2009571
(43) Date de publication de la demande: 02.08.2023
(73) Titulaire: VALEO VISION, 93012 Bobigny Cedex (FR)
(72) Inventeur: GRARD, Christophe, 93012 BOBIGNY Cedex (FR); PLANCHE, Gregory, 93012 BOBIGNY Cedex (FR); GHALY, Youssef, 74321 Bietigheim-Bissingen (DE); MIMOUN, Mickael, 93012 BOBIGNY Cedex (FR)
(74) Mandataire: Valeo Visibility
(86) Numéro de dépôt international: PCT/EP2021/071227
(87) Numéro de publication internationale: WO 2022/063464

(56) Documents cités:
- EP-A2- 2 415 636
- EP-A2- 3 536 575
- WO-A1-2020/099555
- US-A1- 2019 031 197
- US-A1- 2019 143 968

## Description

La présente invention se rapporte à un système d'aide à la conduite d'un véhicule. Elle concerne également un procédé d'aide à la conduite de nuit d'un véhicule et un procédé d'aide à la conduite de jour d'un véhicule. Elle trouve une application particulière mais non limitative dans les véhicules automobiles.

Dans le domaine des systèmes d'aide à la conduite d'un véhicule, un système d'aide à la conduite d'un véhicule comprend de manière connue de l'homme du métier :
- un capteur configuré pour détecter la présence d'un objet dans un environnement extérieur du véhicule,
- une caméra configurée pour acquérir des images de l'environnement extérieur et détecter également la présence de l'objet,
- au moins un dispositif lumineux configuré pour éclairer la route sur laquelle roule ledit véhicule automobile.

La demande de brevet US 2019/031197A1 divulgue un système et une méthode pour déterminer si un véhicule peut entrer dans une route, en particulier une route étroite ou une allée avec de nombreux obstacles. La dite demande vise à améliorer les systèmes d'assistance avancée à la conduite (ADAS) en permettant une prise de décision sur des routes sans voies clairement délimitées ou avec une largeur limitée.

Lorsqu'un objet est détecté par le capteur et par la caméra, s'il se trouve dans la trajectoire du véhicule automobile qui roule, en fonction de la distance, un système d'alerte est activé si l'objet détecté est assez loin du véhicule automobile, et un système de freinage d'urgence est activé pour éviter un accident si l'objet détecté est proche du véhicule automobile.

Un inconvénient de cet état de la technique est que si le véhicule automobile roule trop vite, il y a de forts risques que l'accident ne puisse être évité, même en cas d'activation du système de freinage d'urgence.

Dans ce contexte, la présente invention vise à proposer un système d'aide à la conduite d'un véhicule qui permet de résoudre l'inconvénient mentionné.

A cet effet, l'invention propose un système d'aide à la conduite d'un véhicule, ledit système d'aide à la conduite d'un véhicule comprenant :
- au moins un capteur configuré pour détecter la présence d'un objet dans un environnement extérieur du véhicule,
- au moins une caméra configurée pour acquérir des images de l'environnement extérieur du véhicule et détecter la présence dudit objet dans l'environnement extérieur du véhicule,
- ledit au moins un capteur est en outre configuré pour détecter au moins un espace libre dans l'environnement extérieur dudit véhicule,
- ladite au moins une caméra est en outre configurée pour, à partir desdites images acquises, détecter au moins un espace libre,
- ledit système d'aide à la conduite comprend en outre une unité de contrôle électronique configurée pour sélectionner un espace libre trouvé par ledit au moins un capteur et/ou ladite au moins une caméra,
- ladite unité de contrôle électronique est en outre configurée pour activer la visualisation d'images au niveau de l'espace libre sélectionné de sorte à indiquer une nouvelle trajectoire à suivre pour ledit véhicule, caractérisé en ce que
- ladite unité de contrôle électronique est en outre configurée pour calculer un temps avant collision avec ledit objet détecté
- et en ce que ledit au moins un capteur et ladite au moins une caméra sont configurés pour détecter au moins un espace libre dans l'environnement extérieur dudit véhicule si ledit temps avant collision est inférieur à un seuil, et ladite unité de contrôle électronique est configurée pour activer la visualisation d'images au niveau de l'espace libre sélectionné de sorte à indiquer une nouvelle trajectoire à suivre pour ledit véhicule si ledit temps avant collision est inférieur audit seuil.

Selon des modes de réalisation non limitatifs, ledit système d'aide à la conduite d'un véhicule peut comporter en outre une ou plusieurs caractéristiques supplémentaires prises seules ou selon toutes les combinaisons techniquement possibles, parmi les suivantes.

Selon un mode de réalisation non limitatif, ledit système d'aide à la conduite comprend en outre :
- au moins un dispositif lumineux configuré pour éclairer ledit objet détecté,
- au moins un dispositif lumineux configuré pour éclairer ledit au moins un espace libre sélectionné. Selon un mode de réalisation non limitatif, ledit au moins un dispositif lumineux est en outre configuré pour éclairer la scène dans laquelle se trouve ledit objet détecté.

Selon un mode de réalisation non limitatif, ledit au moins un dispositif lumineux est un projecteur. Selon un mode de réalisation non limitatif, ladite unité de contrôle électronique est configurée pour sélectionner un espace libre trouvé par ledit capteur et par ladite caméra.

Selon un mode de réalisation non limitatif, lesdites images sont des images lumineuses projetées sur une route comprenant ledit espace libre sélectionné.

Selon un mode de réalisation non limitatif, lesdites images sont des images affichées sur une interface homme-machine.

Selon un mode de réalisation non limitatif, ledit véhicule est un véhicule autonome.

Selon un mode de réalisation non limitatif, ledit système d'aide à la conduite comprend en outre un dispositif de commande d'urgence de direction du véhicule configuré pour mouvoir ledit véhicule en direction dudit espace libre sélectionné.

Selon un mode de réalisation non limitatif, ledit véhicule est un véhicule semi-autonome.

Selon un mode de réalisation non limitatif, ledit système d'aide à la conduite comprend en outre un dispositif de commande d'urgence de la direction du véhicule configuré pour relayer un mouvement du véhicule en direction dudit espace libre sélectionné, mouvement initié par une action d'un conducteur sur le volant dudit véhicule.

Selon un mode de réalisation non limitatif, ledit véhicule est un véhicule non-autonome.

Selon un mode de réalisation non limitatif, ladite unité de contrôle électronique est en outre configurée pour transmettre un signal à une interface homme-machine dudit véhicule et/ou modifier la couleur d'un faisceau lumineux d'au moins un module lumineux disposé dans l'habitacle dudit véhicule.

Selon un mode de réalisation non limitatif, lesdites images lumineuses représentent une flèche correspondante à ladite nouvelle trajectoire du véhicule.

Selon un mode de réalisation non limitatif, ledit au moins un dispositif lumineux qui est configuré pour éclairer ledit au moins un espace libre sélectionné est celui configuré pour éclairer ledit objet détecté.

Il est en outre proposé un procédé d'aide à la conduite de nuit d'un véhicule, ledit procédé d'aide à la conduite de nuit comprenant :
- la détection par au moins un capteur de la présence d'un objet dans un environnement extérieur du véhicule,
- l'éclairage par au moins un dispositif lumineux dudit objet détecté,
- l'acquisition par au moins une caméra d'images de l'environnement extérieur du véhicule,
- la détection par ladite au moins une caméra de la présence dudit objet dans l'environnement extérieur du véhicule,
- la détection par ledit au moins un capteur d'au moins un espace libre autour dudit véhicule,
- à partir desdites images acquises, la détection par ladite au moins une caméra d'au moins un espace libre,
- l'éclairage par au moins un dispositif lumineux dudit au moins un espace libre trouvé,
- la sélection par une unité de contrôle électronique dudit au moins un espace libre trouvé par ledit au moins un capteur et/ou par ladite au moins une caméra,
- l'activation par ladite unité de contrôle électronique de la visualisation d'images au niveau de l'espace libre sélectionné de sorte à indiquer une nouvelle trajectoire pour ledit véhicule caractérisé en ce que ledit procédé d'aide à la conduite de nuit comprend en outre :
- le calcul d'un temps avant collision avec ledit objet détecté par ladite unité de contrôle électronique,
- la détection par ledit au moins un capteur et ladite au moins une caméra d'au moins un espace libre dans l'environnement extérieur dudit véhicule si ledit temps avant collision est inférieur à un seuil
- l'activation par ladite unité de contrôle électronique de la visualisation d'images au niveau de l'espace libre sélectionné de sorte à indiquer une nouvelle trajectoire à suivre pour ledit véhicule si ledit temps avant collision est inférieur audit seuil.

Selon des modes de réalisation non limitatifs, ledit procédé d'aide à la conduite de nuit peut comporter en outre une ou plusieurs caractéristiques supplémentaires prises seules ou selon toutes les combinaisons techniquement possibles, parmi les suivantes.

Selon un mode de réalisation non limitatif, ledit procédé d'aide à la conduite de nuit comprend en outre l'éclairage par ledit au moins un dispositif lumineux de la scène dans laquelle se trouve ledit objet détecté.

Selon un mode de réalisation non limitatif, ledit procédé d'aide à la conduite de nuit comprend en outre le calcul par ladite unité de contrôle électronique d'un temps avant collision avec ledit objet détecté.

Selon un mode de réalisation non limitatif, lesdites étapes de détection d'au moins un espace libre, d'éclairage dudit au moins un espace libre, de sélection dudit au moins un espace libre et d'activation de la visualisation d'images sont exécutées si ledit temps avant collision est inférieur ou égal à un seuil.

Selon un mode de réalisation non limitatif, lesdites images sont des images lumineuses projetées sur une route.

Selon un mode de réalisation non limitatif, lesdites images sont des images affichées sur une interface homme-machine.

Il est en outre proposé un procédé d'aide à la conduite de jour d'un véhicule, ledit procédé d'aide à la conduite de jour comprenant :
- la détection par au moins un capteur de la présence d'un objet dans un environnement extérieur du véhicule,
- l'acquisition par au moins une caméra d'images de l'environnement extérieur du véhicule,
- la détection par ladite au moins une caméra de la présence dudit objet dans l'environnement extérieur du véhicule,
- la détection par ledit au moins un capteur d'au moins un espace libre autour dudit véhicule,
- à partir desdites images acquises, la détection par ladite au moins une caméra d'au moins un espace libre,
- la sélection par une unité de contrôle électronique dudit au moins un espace libre trouvé par ledit au moins un capteur et/ou par ladite au moins une caméra,
caractérisé en ce que ledit procédé d'aide à la conduite de jour comprend en outre :
- le calcul d'un temps avant collision avec ledit objet détecté par ladite unité de contrôle électronique,
- la détection par ledit au moins un capteur et ladite au moins une caméra d'au moins un espace libre dans l'environnement extérieur dudit véhicule si ledit temps avant collision est inférieur à un seuil
- l'activation par ladite unité de contrôle électronique de la visualisation d'images au niveau de l'espace libre sélectionné de sorte à indiquer une nouvelle trajectoire à suivre pour ledit véhicule si ledit temps avant collision est inférieur audit seuil.

Selon des modes de réalisation non limitatifs, ledit procédé d'aide de jour à la conduite peut comporter en outre une ou plusieurs caractéristiques supplémentaires prises seules ou selon toutes les combinaisons techniquement possibles, parmi les suivantes.

Selon un mode de réalisation non limitatif, ledit procédé d'aide à la conduite de jour comprend en outre le calcul par ladite unité de contrôle électronique d'un temps avant collision avec ledit objet détecté.

Selon un mode de réalisation non limitatif, lesdites étapes de détection d'au moins un espace libre, de sélection dudit au moins un espace libre et d'activation de la visualisation d'images sont exécutées si ledit temps avant collision est inférieur ou égal à un seuil.

Selon un mode de réalisation non limitatif, lesdites images sont des images lumineuses projetées sur une route.

Selon un mode de réalisation non limitatif, sont des images affichées sur une interface homme-machine.

Selon un mode de réalisation non limitatif, le procédé d'aide à la conduite de jour comprend en outre l'éclairage par au moins un dispositif lumineux dudit objet détecté.

Selon un mode de réalisation non limitatif, le procédé d'aide à la conduite de jour comprend en outre l'éclairage par au moins un dispositif lumineux dudit au moins un espace libre trouvé. L'invention et ses différentes applications seront mieux comprises à la lecture de la description qui suit et à l'examen des figures qui l'accompagnent :
Fig. 1a est une vue schématique d'un système d'aide à la conduite d'un véhicule, le système d'aide à la conduite comprenant au moins un capteur, au moins une caméra, au moins un dispositif lumineux et une unité de contrôle électronique, selon un mode de réalisation non limitatif de l'invention,
Fig. 1b illustre les fonctions dudit capteur, de ladite caméra, dudit au moins un dispositif lumineux et de ladite unité de contrôle électronique du système d'aide à la conduite d'un véhicule de la figure 1a, selon un mode de réalisation non limitatif,
Fig. 2a est une vue schématique de dessus du véhicule de la figure 1a et d'un objet détecté et éclairé par le système d'aide à la conduite des figures 1a et 1b, selon un mode de réalisation non limitatif,
Fig. 2b est une vue schématique d'une image acquise par la caméra du système d'aide à la conduite des figures 1a et 1b, ladite image montrant l'objet détecté de la figure 2a, selon un mode de réalisation non limitatif,
Fig. 3a est une vue schématique de dessus du véhicule de la figure 1a et d'un espace libre détecté et éclairé par le système d'aide à la conduite des figures 1a et 1b, selon un mode de réalisation non limitatif,
Fig. 3b est une vue schématique d'une image acquise par la caméra du système d'aide à la conduite des figures 1a et 1b, ladite image montrant l'espace libre détecté de la figure 3a, selon un mode de réalisation non limitatif,
Fig. 4a est une vue schématique de dessus du véhicule de la figure 1a et d'un espace libre sélectionné et éclairé par le système d'aide à la conduite des figures 1a et 1b, et d'une image lumineuse projetée sur la route sur laquelle roule ledit véhicule, au niveau dudit espace libre sélectionné, selon un premier mode de réalisation non limitatif,
Fig. 4b est une vue schématique d'une image acquise par la caméra du système d'aide à la conduite des figures 1a et 1b, et de ladite image lumineuse de la figure 4a projetée au niveau dudit l'espace libre sélectionné, selon un mode de réalisation non limitatif,
Fig. 5 est une vue schématique de dessus du véhicule de la figure 1a et d'un espace libre sélectionné par le système d'aide à la conduite des figures 1a et 1b, et d'une image affichée sur une interface homme-machine, au niveau dudit espace libre sélectionné, selon un deuxième mode de réalisation non limitatif,
Fig. 6 est un organigramme d'un procédé d'aide à la conduite de nuit d'un véhicule, ledit procédé d'aide à la conduite de nuit étant mis en œuvre par ledit système d'aide à la conduite des figures 1a et 1b, selon un mode de réalisation non limitatif,
Fig. 7 est un organigramme d'un procédé d'aide à la conduite de jour d'un véhicule, ledit procédé d'aide à la conduite de jour étant mis en œuvre par ledit système d'aide à la conduite des figures 1a et 1b, selon un mode de réalisation non limitatif,
Fig. 8 illustre une ligne de temps relative à un temps avant collision entre un véhicule et un piéton, le temps avant collision étant une condition de mise en œuvre de certaines étapes du procédé d'aide à la conduite de nuit de la figure 6 et du procédé d'aide à la conduite de jour de la figure 7, selon un mode de réalisation non limitatif.

Les éléments identiques, par structure ou par fonction, apparaissant sur différentes figures conservent, sauf précision contraire, les mêmes références.

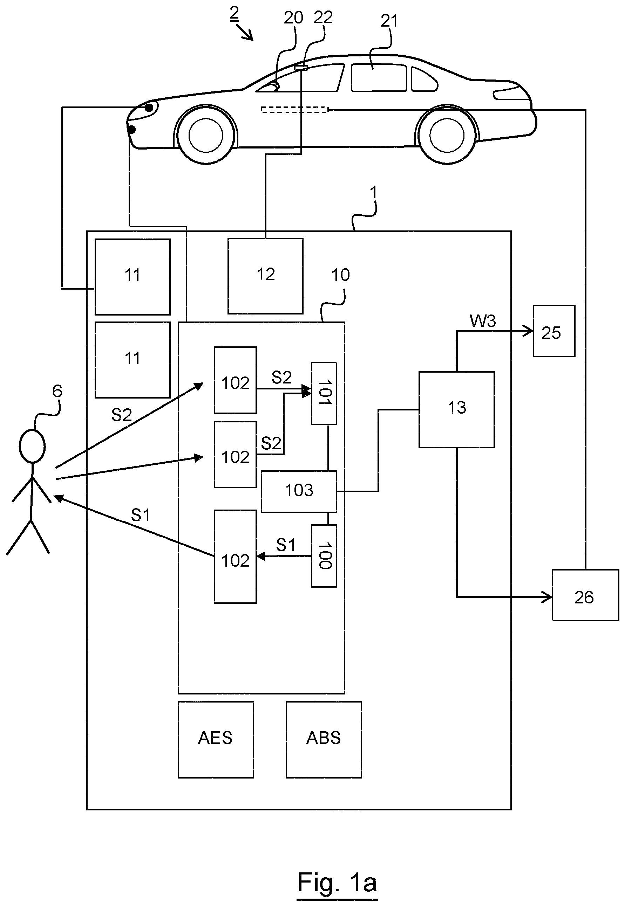

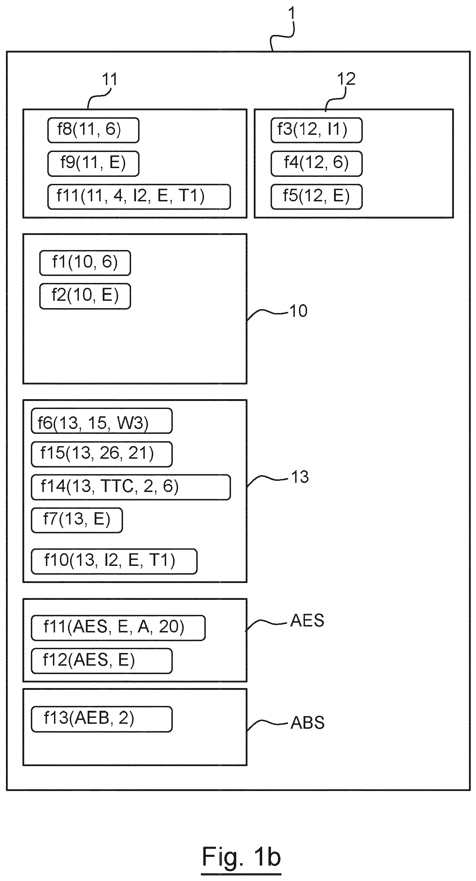

Le système d'aide à la conduite 1 d'un véhicule 2 selon l'invention est décrit en référence aux figures 1a à 5 et 8. Dans un mode de réalisation non limitatif, le véhicule 2 est un véhicule automobile. Par véhicule automobile, on entend tout type de véhicule motorisé. Ce mode de réalisation est pris comme exemple non limitatif dans la suite de la description. Dans la suite de la description, le véhicule 2 est ainsi autrement appelé véhicule automobile 2. Le véhicule automobile 2 comprend un volant 20 et un habitacle 21. Il comprend en outre deux projecteurs 11. Dans des modes de réalisation non limitatifs, le véhicule automobile 2 est un véhicule autonome, semi-autonome ou non-autonome. Dans le cas d'un véhicule 2 autonome ou semi-autonome, dans un mode de réalisation non limitatif, le système d'aide à la conduite 1 comprend un dispositif de commande d'urgence de la direction du véhicule 2, référencé AES sur les figures 1a et 1b, autrement appelé dispositif AES pour « Autonomous Emergency Steering » dans le langage anglo-saxon. Dans un mode de réalisation non limitatif, le système d'aide à la conduite 1 comprend également un dispositif de freinage d'urgence, référencé AEB sur les figures 1a et 1b, autrement appelé dispositif AEB pour « Autonomous Emergency Braking» dans le langage anglo-saxon. Le dispositif AEB est configuré pour effectuer un freinage d'urgence du véhicule automobile 2 (fonction f13(AEB, 2) illustrée sur la figure 1b) dans le cas d'un véhicule automobile 2 autonome ou semi-autonome. Dans un mode de réalisation non limitatif, le système d'aide à la conduite 1 est activé au démarrage du véhicule automobile 2.

Tel qu'illustré sur les figures 1a et 1b, le système d'aide à la conduite 1 comprend :
- au moins un capteur 10,
- au moins une caméra 12,
- une unité de contrôle électronique 13.

Dans un mode de réalisation non limitatif, le système d'aide à la conduite 1 comprend en outre au moins un dispositif lumineux 11.

Les éléments du système d'aide à la conduite 1 sont décrits ci-après.

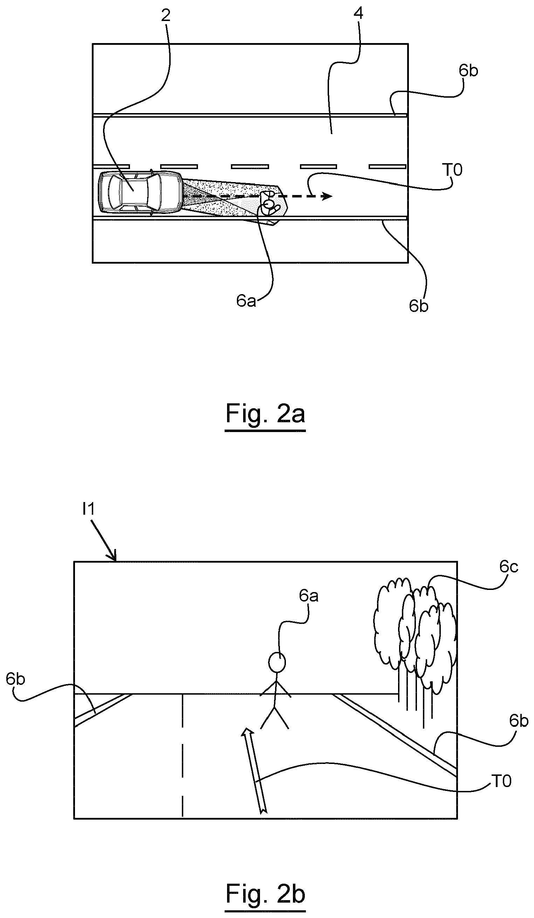

Ledit au moins un capteur 10 est décrit en détail ci-après. Ledit au moins un capteur 10 est configuré pour détecter la présence d'au moins un objet 6 dans un environnement extérieur du véhicule 2 (fonction f1(10, 6) illustrée sur la figure 1b). Il est ainsi configuré pour scanner l'environnement extérieur du véhicule automobile 2, grâce à l'émission d'ondes radars. Dans un mode de réalisation non limitatif, le capteur est un capteur radar. Dans un autre mode de réalisation non limitatif, le capteur est un lidar. Dans un mode de réalisation non limitatif, le capteur 10 est un capteur à ondes millimétriques (entre 24GHz et 300 GHz) ou hyperfréquences (entre 300MHz et 79GHz) ou micro-ondes (entre 1GHz et 300GHz). Dans des modes de réalisation non limitatifs, le capteur 10 est disposé derrière le pare-choc avant du véhicule automobile 2, ou dans un dispositif lumineux 11 du véhicule automobile 2. Ainsi, il va détecter le ou les objets 6 (mobiles ou immobiles) se trouvant devant et sur les côtés du véhicule automobile 2, à savoir dans son champ de vision, autrement appelé « Field of View » dans le langage anglo-saxon, et qui sont dans la trajectoire courante T0 (illustrée sur les figures 2a et 2b) du véhicule automobile 2. Ce sont les objets 6 qui posent problème, à savoir qui sont sur la trajectoire courante T0 du véhicule automobile 2 ou qui arrivent sur ladite trajectoire courante T0. Ce sont ainsi des obstacles qu'il faut éviter. On notera que l'on sait si un objet 6 arrive sur ladite trajectoire courante T0 en calculant sa vitesse et son orientation. Le capteur 10 donne ces informations. Ce calcul étant bien connu de l'homme du métier, il n'est pas décrit ici. On notera que lorsqu'il va détecter un objet 6, le capteur 10 le classifie. Il va ainsi l'identifier comme étant un piéton, un véhicule, un arbre etc. Dans l'exemple non limitatif illustré sur les figures 2a et 2b, le capteur 10 a détecté un piéton 6a dans son champ de vision. On notera que le capteur 10 détecte tous les objets dans son champ de vision. Ainsi, il peut détecter l'arbre 6c, et le marquage 6b en même temps que le piéton 6a s'ils entrent dans son champ de vision.

Tel qu'illustré sur la figure 1a, le capteur 10 comprend un émetteur 100 configuré pour générer une pluralité d'ondes radars S1, un récepteur 101 configuré pour traiter une pluralité d'ondes radars S2, et une pluralité d'antennes 102. Dans un mode de réalisation non limitatif, un seul composant électronique peut être utilisé pour les deux fonctions émission et réception. On aura ainsi un ou plusieurs émetteur/récepteur appelés « transceiver » dans le langage anglo-saxon. Ledit émetteur 100 génère des ondes radars S1 qui sont par la suite émises par une antenne 102, qui lorsqu'elles rencontrent un objet 6 dans l'environnement extérieur du véhicule 2 se réfléchissent sur ledit objet 6. Les ondes radars ainsi réfléchies sont transmises en retour au capteur 10. Ce sont les ondes radars S2 reçues par les antennes 102 et traitées par le récepteur 101. Ce sont des ondes radars retransmises en direction du capteur 10. Dans un mode de réalisation non limitatif, les ondes radars S1 émises ou les ondes radars S2 reçues sont des signaux radio fréquence (dans le cas du capteur radar). Dans un autre mode de réalisation non limitatif, les ondes radars S1 émises ou les ondes radars S2 reçues sont des signaux infrarouges (dans le cas du lidar). Dans un mode de réalisation non limitatif, le capteur 10 comprend une pluralité d'émetteurs 100 et une pluralité de récepteurs 101. Dans un mode de réalisation non limitatif, le capteur 10 comprend au moins une antenne 102, dite antenne émettrice et au moins deux antennes 102, dites antennes réceptrices. Ainsi, une ou plusieurs des antennes 102, dite antenne émettrice, est configurée pour émettre les ondes radars S1 générées par l'émetteur 100. Ainsi, deux ou plusieurs autres des antennes 102, dite antennes réceptrices, sont configurées pour recevoir les ondes radars S2 et les communiquer au récepteur 101 qui les traite par la suite. La différence de phase entre les ondes radars S2 qui sont reçues par les antennes réceptrices permet de déterminer la direction desdites ondes radars S2 et la position dudit objet 6.

Tel qu'illustré sur la figure 1a, le capteur 10 comprend en outre une unité de contrôle électronique 103 configurée pour contrôler l'émetteur 100 et le récepteur 101 et communiquer avec l'unité de contrôle électronique 13 du système d'aide à la conduite 1. En particulier, l'unité de contrôle électronique 103 va transmettre les ondes radars S2 traitées par le récepteur 101 à l'unité de contrôle électronique 13.

Le capteur 10 est en outre configuré pour détecter au moins un espace libre E autour du véhicule automobile 2 (fonction f2(10, E) illustrée sur la figure 1b). Afin, de détecter un espace libre E, il regarde l'absence d'objets 6 dans un espace donné de l'environnement extérieur du véhicule. A savoir, il détecte s'il n'existe pas d'ondes radars S2 de retour ou si les ondes radars S2 de retour indiquent qu'il existe un ou des objets 6 mais qui sont lointains.

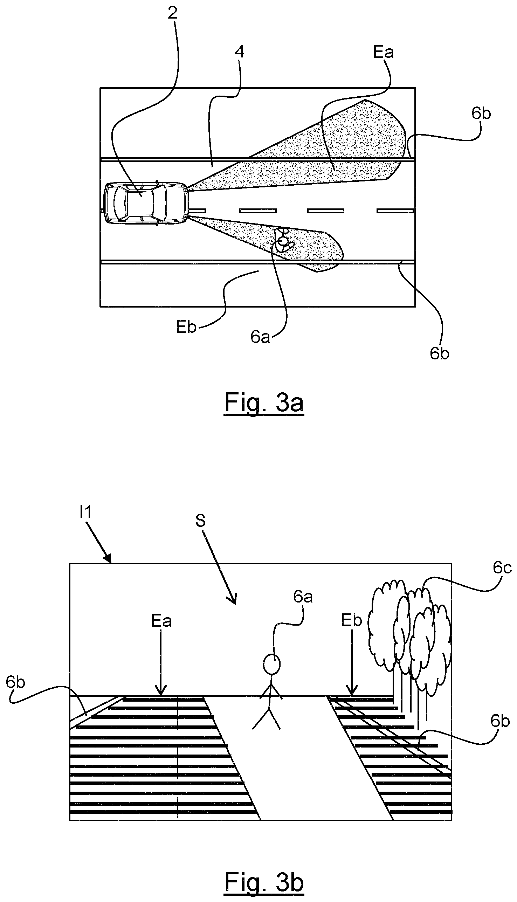

Dans l'exemple non limitatif illustré sur les figures 3a et 3b, le capteur 10 a détecté deux espaces libres Ea et Eb dont un espace libre Ea, qui se trouve à gauche du piéton 6a et un espace libre Eb qui se trouve à droite du piéton 6a.

Ladite au moins une caméra 12 est décrite en détail ci-après. La caméra 12 est configurée pour acquérir des images I1 de l'environnement extérieur du véhicule 2 (fonction f3(12, I1) illustrée sur la figure 1b). Dans un mode de réalisation non limitatif, la caméra 12 est une caméra haute définition, dite caméra HD. Dans des exemples non limitatifs, la caméra 12 comprend une résolution de 4096x1080 pixels. Dans un mode de réalisation non limitatif, la caméra 12 est une caméra infrarouge ou proche infrarouge. Ce mode de réalisation non limitatif permet d'acquérir des images I1 de l'environnement extérieur du véhicule 2 de nuit. Dans un autre mode de réalisation non limitatif, la caméra 12 permet d'acquérir des images I1 de jour. Dans ce dernier cas, elle fonctionne ainsi dans la lumière visible. Les images I1 sont autrement appelées images primaires I1.

Tel qu'illustré sur la figure 1a, dans un mode de réalisation non limitatif, la caméra 12 est disposée dans l'habitacle 21 du véhicule automobile 2, notamment elle est intégrée derrière le pare-brise au niveau du rétroviseur central 22 dans un exemple non limitatif. Les images I1 de l'environnement extérieur du véhicule automobile 2 peuvent comprendre des objets mobiles tels que dans des exemples non limitatifs un piéton, une bicyclette, un autre véhicule automobile etc. et des objets immobiles tels que dans des exemples non limitatifs un lampadaire, un arbre, un bâtiment, le marquage au sol de la route 4 sur laquelle circule le véhicule automobile 2 ou le marquage au sol des routes adjacentes etc. Dans l'exemple non limitatif illustré sur la figure 2b, on peut voir une image I1 qui montre un piéton 6a, le marquage au sol 6b de la route 4 sur laquelle roule le véhicule automobile 2, des arbres 6c.

Ainsi, à partir des images acquises I1, la caméra 12 est en outre configurée pour détecter la présence d'au moins un objet 6 dans l'environnement extérieur du véhicule automobile 2 (fonction illustrée f4(12, 6) illustrée sur la figure 1b)).

On notera que la combinaison du capteur 10 et de la caméra 12 permet d'avoir un niveau de sécurité appelé ASIL D pour «Automative System Integrativ Level » décrite par la norme ISO 26262. On notera que le capteur 10 et la caméra 12 sont chacun classés ASIL B. La combinaison de deux dispositifs classés ASIL B permet d'obtenir un niveau de sécurité supérieur, ici ASIL D. Cela permet notamment d'augmenter la marge de sécurité pour freiner fort et éviter ainsi l'accident s'il n'existe pas d'espace libre E de trouvé. En effet, par exemple de nuit, si la caméra 12 ne voit pas d'objet 6 en raison d'un manque d'éclairage ou pas suffisamment précisément pour le classifier correctement, le capteur 10 peut détecter l'objet 6 dans le noir et par la suite le dispositif lumineux 11 peut éclairer l'objet 6, qui permet à la caméra 12 de détecter et classifier correctement l'objet 6 comme l'a fait le capteur 10. Ainsi, si l'objet 6 est classifié comme étant un piéton par exemple, s'il est assez loin, une alerte peut être activée, et s'il est proche, un freinage peut être activé, et si il est trop proche, le véhicule 2 peut s'engager dans un espace libre E qui est disponible.

A partir desdites images I1 acquises, la caméra 12 est en outre configurée pour détecter au moins espace libre E (fonction f5(12, E) illustrée sur la figure 1b). Dans l'exemple non limitatif de la figure 3b, les espaces libres Ea et Eb sont ainsi également détectés par la caméra 12.

Ladite unité de contrôle électronique 13 est décrite en détail ci-après. Dans un mode de réalisation non limitatif, ladite unité de contrôle électronique 13 est indépendante du capteur 10 et de la caméra 12. Dans un autre mode de réalisation non limitatif, l'unité de contrôle électronique 13 est intégrée dans le capteur 10 ou dans la caméra 12. Dans un mode de réalisation non limitatif, ladite unité de contrôle électronique 13 est configurée pour transmettre un signal W3 (illustré sur la figure 1a) à une interface homme-machine 25 dudit véhicule automobile 2 (fonction f6(13, 25, W3) illustrée sur la figure 1b) et/ou modifier la couleur du faisceau lumineux d'un ou plusieurs modules lumineux 26 disposés dans l'habitacle 21 dudit véhicule 2 (fonction f15(13, 26, 21) illustrée sur la figure 1b). Ces fonctions f6 et f15 sont exécutées suite à la détection d'un objet 6, ou pour avertir le conducteur du changement de trajectoire, ou pour avertir le conducteur qu'il doit changer de trajectoire, ou pour lui dire de freiner d'urgence.

Ainsi, dans un exemple non limitatif, le signal W3 comprend message visuel et/ou un message auditif d'alerte pour avertir le conducteur du véhicule automobile 2 qu'il existe un objet 6 devant ou sur les côtés du véhicule automobile 2, à savoir un objet 6 qui se trouve sur la trajectoire courante T0 du véhicule automobile 2 ou qui arrive en direction de ladite trajectoire courante T0, ou pour avertir le conducteur qu'il doit changer de trajectoire ou qu'il doit freiner d'urgence. Dans un exemple non limitatif, le signal W3 est un affichage visuel du piéton 6a sur un écran HUD, avec par exemple une couleur rouge. Le conducteur est ainsi plus vigilant sur sa conduite ou avertit. Dans un mode de réalisation non limitatif, les modules lumineux 26 sont des éclairages d'ambiance à l'intérieur du véhicule automobile 2. Leur faisceau lumineux peut être ainsi modifié de sorte à émettre de la couleur rouge pour avertir le conducteur du véhicule automobile 2 qu'il existe un objet 6 devant ou sur les côtés du véhicule automobile 2, ou qu'il doit changer de trajectoire ou qu'il doit freiner d'urgence. Le conducteur est ainsi plus vigilant sur sa conduite ou avertit. On notera que si les modules lumineux 26 sont éteints, ils peuvent être allumés par l'unité de contrôle électronique 13 de sorte à émettre un faisceau lumineux de couleur rouge dans un exemple non limitatif.

Ladite unité de contrôle électronique 13 est en outre configurée pour calculer un temps avant collision TTC entre ledit véhicule automobile 2 et l'objet 6 détecté (fonction f14(13, TTC, 2, 6) illustrée sur la figure 1b). De manière bien connue de l'homme du métier, le temps avant collision TTC est calculé à partir de la vitesse du véhicule automobile 2, de la distance de l'objet 6 par rapport au véhicule automobile 2 et de la direction de l'objet 6.

On notera que la fonction f2 de détection d'objets 6 par le capteur 10, et la fonction f5 de recherche d'espace libre E par la caméra 12 se fait en continu. Par contre, la décision d'utiliser le résultat de la détection d'objets 6 et d'espace libre E se fait par l'unité de contrôle électronique 13 en fonction du temps avant collision TTC calculé par l'unité de contrôle électronique 13. on utilise le résultat des fonctions f2 et f5.

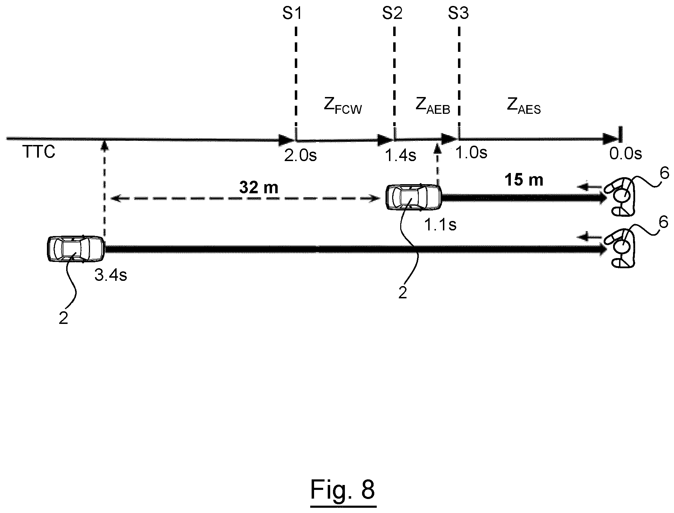

En effet, suite à la détection d'un objet 6, trois cas peuvent se présenter qui sont les suivants tel qu'illustré sur la figure 8 :
- le temps avant collision TTC est supérieur à un premier seuil S1 : le conducteur du véhicule automobile 2 peut lui-même décider de l'action à prendre pour éviter une collision avec l'objet 6. Dans un mode de réalisation non limitatif, le premier seuil S1 est égal à 2 secondes,
- le temps avant collision TTC est compris entre ce premier seuil S1 et un deuxième seuil S2. Le véhicule automobile 2 se trouve dans une première zone Z_{FCW} où une alerte est donnée au conducteur pour qu'il décide de l'action à prendre pour éviter la collision. Dans un mode de réalisation non limitatif, le deuxième seuil S2 est égal à 1,4 secondes,
- le temps avant collision TTC est compris entre ce deuxième seuil S2 et un troisième seuil S3. Le véhicule automobile 2 se trouve dans une deuxième zone Z_{AEB} où le dispositif AEB est déclenché pour freiner automatiquement le véhicule automobile 2 et éviter la collision. Dans un mode de réalisation non limitatif, le troisième seuil S3 est égal à 1 seconde.

Dans ces trois cas, il n'est pas nécessaire d'utiliser le résultat de la fonction f5 qui est la recherche d'espace libre E qui va servir à dévier le véhicule automobile 2 de sa trajectoire courante T0 pour éviter la collision avec l'objet 6. Par contre si le temps avant collision TTC est inférieur ou égal au troisième seuil S3, le véhicule automobile 2 est dans une troisième zone Z_{AES} où il est utile de sélectionner un espace libre E pour rediriger le véhicule automobile 2 vers une trajectoire T1, autrement appelée nouvelle trajectoire T1, pour éviter la collision avec l'objet 6.

Ainsi, ladite unité de contrôle électronique 13 est en outre configurée pour sélectionner un espace libre E trouvé au moins par le capteur 10 (fonction f7(13, E) illustrée sur la figure 1b) ou la caméra 12 et trouvé au plus par le capteur 10 et par la caméra 12. On notera qu'il peut arriver le cas où la caméra ne trouve pas d'espace libre E dans le cas par exemple où elle est défectueuse, mais où le capteur 10 en a trouvé un, ou inversement. Si un seul espace libre E est trouvé, il sélectionne ledit espace libre E. Dans un mode de réalisation non limitatif, en fonction du temps avant collision TTC, l'unité de contrôle électronique 13 exécute ou non la fonction f7. Ainsi, si le temps avant collision TTC est inférieur ou égal au troisième seuil S3, la fonction f7 est exécutée.

Si plusieurs espaces libres E sont trouvés, l'unité de contrôle électronique 13 sélectionne l'espace libre E selon au moins un critère déterminé. Dans des exemples non limitatifs, le critère déterminé est :
- a) l'espace libre E est plus grand que la largeur du véhicule automobile 2 pour que ce dernier puisse s'engager dans cet espace libre E,
- b) l'espace libre E se trouve sur une route 4. La route 4 est une route sur laquelle roule le véhicule automobile 2, ou une route adjacente sur laquelle le véhicule automobile 2 peut aller. La route peut être bitumée, pavée, cimentée etc.
- c) l'espace libre E se trouve à l'intérieur du marquage au sol d'une route (que ce soit celle sur laquelle roule le véhicule automobile 2 ou celle sur une route adjacente),
- d) l'espace libre E permet une manœuvre sécurisée pour le véhicule automobile 2. Ainsi, par exemple si un espace libre E oblige à faire effectuer un virage trop important (par exemple de 90°) au véhicule automobile 2, cet espace libre E n'est pas choisi car la manœuvre pour faire tourner le véhicule automobile 2 peut être dangereuse.

L'espace libre E qui remplira le plus de critères déterminés sera sélectionné. Dans l'exemple non limitatif illustré sur les figures 3a et 3b, l'unité de contrôle électronique 13 a sélectionné un des espaces libres, à savoir l'espace libre Ea, qui se trouve à gauche du véhicule automobile 2 parmi les deux espaces libres Ea et Eb. En effet, l'espace libre Ea remplit les quatre critères déterminés cités ci-dessus tandis que l'espace libre Eb ne remplit que le dernier critère. Il n'est en effet pas assez large pour le véhicule automobile 2 et ne se trouve pas complètement sur la route 4 sur laquelle roule le véhicule automobile 2 puisqu'il est en partie en dehors du marquage au sol 6b de ladite route 4.

Ledit au moins un dispositif lumineux 11 est décrit en détail ci-après. Dans un mode de réalisation non limitatif, ledit au moins un dispositif lumineux 11 est un projecteur du véhicule automobile 2. Dans une variante de réalisation non limitative, le projecteur est un projecteur matriciel. Cela permet d'éclairer juste une zone délimitée pour bien démarquer le ou les objets 6 détectés ou un espace libre E sélectionné par exemple. Pour rappel, un dispositif lumineux 11 dit matriciel comporte une pluralité de modules lumineux (non illustrés) qui forment une matrice dite « matrix beam ». L'ensemble des segments lumineux des différents modules lumineux forme alors un faisceau lumineux segmenté appelé également faisceau lumineux matriciel. Les segments lumineux sont activables sélectivement, à savoir ils peuvent être générés de façon indépendante les uns des autres.

Dans un mode de réalisation non limitatif, ledit au moins un dispositif lumineux 11 est configuré pour éclairer le ou les objets 6 détectés au moins par le capteur radar 10 et au plus par le capteur 10 et la caméra 12 (fonction f8(11, 6) illustrée sur la figure 1b). Ainsi, le dispositif lumineux 11 éclaire l'objet 6 dès qu'il est détecté par le capteur 10. Cela permet d'aider la caméra 12 à le détecter également s'il elle n'a pas pu le faire et sinon de l'aider à classifier ledit objet 6 si elle n'a pas pu le faire.

Dans l'exemple non limitatif illustré sur les figures 2a, le dispositif lumineux 11 éclaire le piéton 6a qui se situe sur la trajectoire courante T0 du véhicule automobile 2. Si un autre piéton se trouve sur le trottoir et qu'il ne se dirige pas sur la trajectoire T0 (il ne se dirige pas dans la direction du véhicule automobile 2), il n'est pas éclairé. Dans un mode de réalisation non limitatif, le système d'aide à la conduite 1 comprend deux dispositifs lumineux 11 configurés pour éclairer le ou les objets détectés 6. Ainsi, le projecteur 11 éclaire le ou les objets 6 qui se trouvent sur la trajectoire courante T0 du véhicule automobile 2 ou qui se dirigent en direction de sa trajectoire courante T0.

Dans un mode de réalisation non limitatif, ledit au moins un dispositif lumineux 11 est en outre configuré pour éclairer ledit au moins espace libre E sélectionné par ladite unité de contrôlé électronique 13 (fonction f9(11, E) illustrée sur la figure 1b). Dans l'exemple non limitatif illustré sur la figure 3a, le dispositif lumineux 11 éclaire un des deux espaces libres Ea et Eb. Il éclaire l'espace libre Ea qui se trouve à gauche du piéton 6a qui a été sélectionné. Dans un mode de réalisation non limitatif, en fonction du temps avant collision TTC, le dispositif lumineux 11 exécute ou non la fonction f9. Ainsi, si le temps avant collision TTC est inférieur ou égal au troisième seuil S3, la fonction f9 est exécutée. Dans un mode de réalisation non limitatif, le dispositif lumineux 11 qui éclaire l'espace libre E est le même que celui qui éclaire l'objet 6 détecté.

Suite à la sélection d'un espace libre E, ladite unité de contrôle électronique 13 est en outre configurée pour activer la visualisation d'images I2 au niveau de l'espace libre E sélectionné de sorte à indiquer une nouvelle trajectoire T1 à suivre pour ledit véhicule 2 (fonction illustrée f10(13, I2, E, T1) sur la figure 1b. Les images I2 sont autrement appelées images secondaires I2. Cette trajectoire T1 est une nouvelle trajectoire, différente de la trajectoire courante T0 du véhicule automobile 2. Ainsi, cela permet d'indiquer au véhicule automobile 2 la nouvelle trajectoire T1 qu'il doit suivre, qui est différente de sa trajectoire courante T0 dans le cas où un espace libre E valide est trouvé, à savoir qu'il a été sélectionné. Dans un mode de réalisation non limitatif, en fonction du temps avant collision TTC, l'unité de contrôle électronique 13 exécute ou non la fonction f10. Ainsi, si le temps avant collision TTC est inférieur ou égal au troisième seuil S3, la fonction f10 est exécutée.

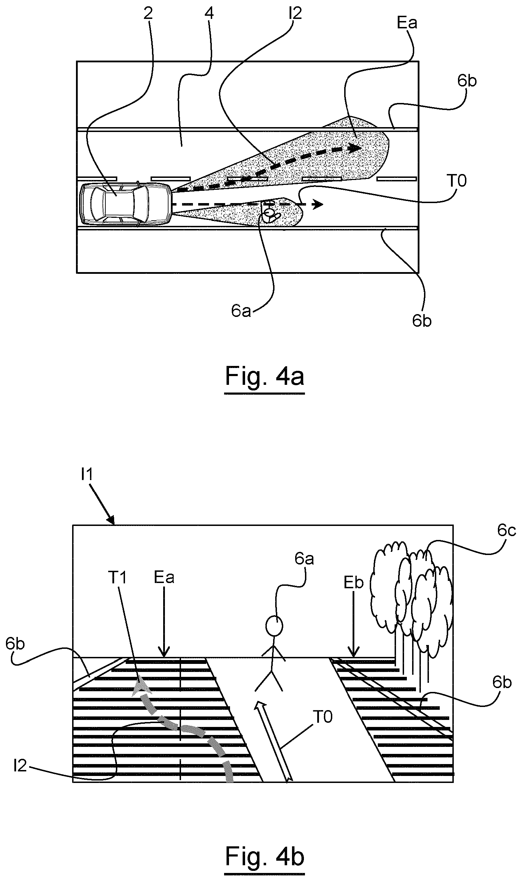

Dans un premier mode de réalisation non limitatif illustré sur les figures 4a et 4b, les images I2 sont des images lumineuses projetées sur la route 4 qui comprend ledit espace libre sélectionné E. Ici, la route 4 est celle sur laquelle roule le véhicule automobile 2. On notera que cela pourrait être une route adjacente qui comprend donc un espace libre E sur laquelle peut s'engager le véhicule automobile 2. Les images lumineuses I2 sont projetées par ledit au moins dispositif lumineux 11. Dans un mode de réalisation non limitatif, elles sont projetées par le même dispositif lumineux 11 qui éclaire l'objet 6 détecté. Ainsi, l'unité de contrôle électronique 13 va activer la visualisation des images I2 en activant le dispositif lumineux 11 à cet effet. Le dispositif lumineux 11 est ainsi en outre configuré pour projeter sur une route 4, ici sur laquelle roule ledit véhicule automobile 2, des images lumineuses I2 au niveau de l'espace libre E sélectionné de sorte à indiquer une trajectoire T1 à suivre pour ledit véhicule automobile 2 (fonction f11(11, 4, I2, E, T1) illustrée sur la figure 1b). Le dispositif lumineux 11 est ainsi activé pour ladite projection des images I2. Dans l'exemple non limitatif illustré sur les figures 4a et 4b, la nouvelle trajectoire T1 se trouve sur la gauche du véhicule automobile 2.

Dans un mode de réalisation non limitatif, les images lumineuses I2 projetées sur ladite route 4 pour indiquer la trajectoire T1 à suivre pour le véhicule 2 représentent une flèche correspondante à ladite trajectoire T1 à suivre. Ainsi, dans l'exemple non limitatif illustré sur les figures 4a et 4b, on peut voir une flèche en traits discontinus qui indique la nouvelle trajectoire T1 que le véhicule automobile 2 doit suivre. On notera que la figure 4b est la figure 3b sur laquelle a été représentée la projection des images lumineuses I2 qui indiquent la nouvelle trajectoire T1 à suivre, ainsi que la trajectoire courante T0 du véhicule automobile 2, pour illustration. Ainsi, dans l'exemple non limitatif illustré, les images I2, ici la flèche indiquant la trajectoire T1, peut être visualisée par le conducteur au niveau dudit espace libre Ea qui a été sélectionné.

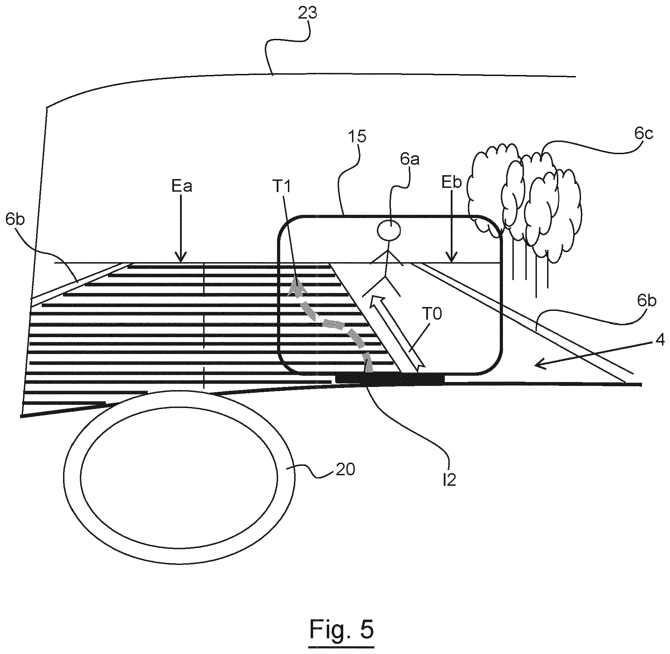

Dans un deuxième mode de réalisation non limitatif, les images I2 sont des images affichées sur une interface homme-machine 25. Ainsi, l'unité de contrôle électronique 13 va activer la visualisation des images I2 en activant l'interface homme-machine 25 à cet effet. L'interface homme-machine 25 est ainsi activée pour l'affichage des images I2. Dans des exemples non limitatifs, l'interface homme-machine 25 est un écran de tableau de bord, un écran de console centrale, un écran pour un affichage tête haute, autrement appelé écran HUD pour « Head Up Display » dans le langage anglo-saxon etc. Tel qu'illustré sur la figure 5, dans un exemple non limitatif, l'interface homme-machine 25 est un écran HUD. Sur la figure 5, on peut voir le volant 20 du véhicule automobile 2 ainsi que le pare-brise 23 à travers lequel le conducteur peut voir la route 4, et l'environnement extérieur du véhicule automobile 2. Notamment, il voit le piéton 6a, le marquage au sol 6b de la route 4, et les arbres 6c. Sur la figure 5 est illustré l'espace libre Ea sélectionné en trait horizontaux pour illustration.

Dans un mode de réalisation non limitatif, les images I2 affichées sur l'interface homme-machine 25 pour indiquer la nouvelle trajectoire T1 à suivre pour le véhicule automobile 2 représentent une flèche correspondante à ladite trajectoire T1 à suivre. Ainsi, dans l'exemple non limitatif illustré sur la figure 5, on peut voir une flèche en traits discontinus sur l'écran HUD qui indiquent la nouvelle trajectoire T1 que le véhicule automobile 2 doit suivre. Ainsi, sur son écran HUD, le conducteur va visualiser la nouvelle trajectoire T1 à suivre du véhicule automobile 2 grâce à la flèche affichée I2. Dans un mode de réalisation non limitatif, la trajectoire courante T0 peut être également affichée sur l'interface homme-machine 25 tel qu'illustré. Ainsi, dans l'exemple non limitatif illustré, les images I2, ici la flèche indiquant la nouvelle trajectoire T1, se superposent au travers de l'écran HUD, à l'espace libre Ea vu au travers du pare brise 23. Ainsi, la flèche peut être visualisée par le conducteur au niveau dudit espace libre Ea qui a été sélectionné.

Ainsi, dans le cas d'un véhicule automobile 2 non autonome, la trajectoire T1 indiquée permet au conducteur du véhicule automobile 2 de savoir dans quelle direction il doit mouvoir le véhicule automobile 2 pour aller sur l'espace libre E sélectionné.

Ainsi, dans le cas d'un véhicule automobile 2 semi-autonome, la trajectoire T1 indiquée permet au conducteur du véhicule automobile 2 de savoir dans quelle direction il doit tourner le volant 20 du véhicule automobile 2 pour aller sur l'espace libre E sélectionné. Ainsi, dans le cas d'un véhicule automobile 2 semi-autonome, c'est le conducteur qui doit initier une action A sur le volant 20, ici un braquage du volant 20 à gauche ou à droite, qui permet d'initier un mouvement du véhicule automobile 2 vers l'espace libre E sélectionné, avant que le dispositif AES ne prenne le relais et ne continue le mouvement du véhicule automobile 2 vers l'espace libre E sélectionné en fonction de la nouvelle trajectoire T1. Ainsi, dans ce cas, le dispositif AES est configuré pour relayer un mouvement du véhicule automobile 2 en direction dudit espace libre E sélectionné, mouvement initié par une action A d'un conducteur dudit véhicule automobile 2 sur son volant 20 (fonction illustrée f11(AES, E, A, 20) sur la figure 1b).

Ainsi, dans le cas d'un véhicule automobile 2 autonome, la trajectoire T1 indiquée permet au conducteur (même s'il ne fait aucune action dans ce cas) de savoir dans quelle direction le véhicule automobile 2 va aller. Le dispositif AES suit la nouvelle trajectoire T1 et ainsi dirige le véhicule automobile 2 vers l'espace libre E sélectionné en fonction de cette nouvelle trajectoire T1. Ainsi, dans ce cas, le dispositif AES est configuré pour mouvoir ledit véhicule automobile 2 en direction dudit espace libre E sélectionné (fonction illustrée f12(AES, E) sur la figure 1).

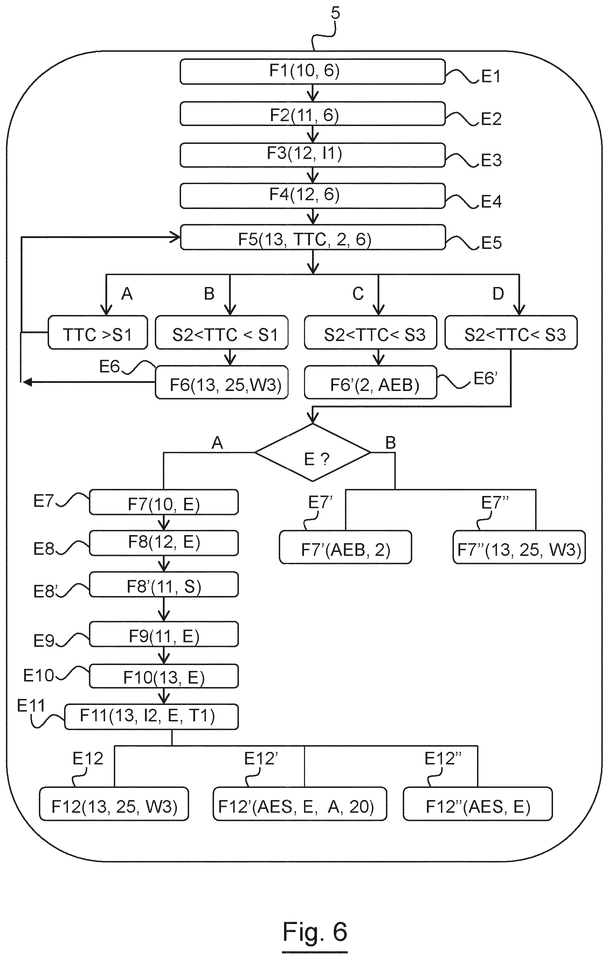

Ainsi, le système d'aide à la conduite 1 décrit permet la mise en œuvre d'un procédé d'aide à la conduite de nuit 5 tel qu'illustré sur la figure 6, selon un mode de réalisation non limitatif. Selon ce mode de réalisation non limitatif illustré, un seul objet 6 est détecté. Selon ce mode de réalisation non limitatif illustré, ledit au moins un dispositif lumineux 11 est un projecteur. Selon ce mode de réalisation non limitatif, les deux projecteurs 11 éclairent au départ un objet 6 détecté. Selon ce mode de réalisation non limitatif illustré, les images I2 sont des images projetées au sol sur la route 4 sur laquelle roule le véhicule automobile 2. Selon ce mode de réalisation non limitatif, le temps avant collision TTC est pris en compte pour la recherche et la sélection d'un espace libre E.

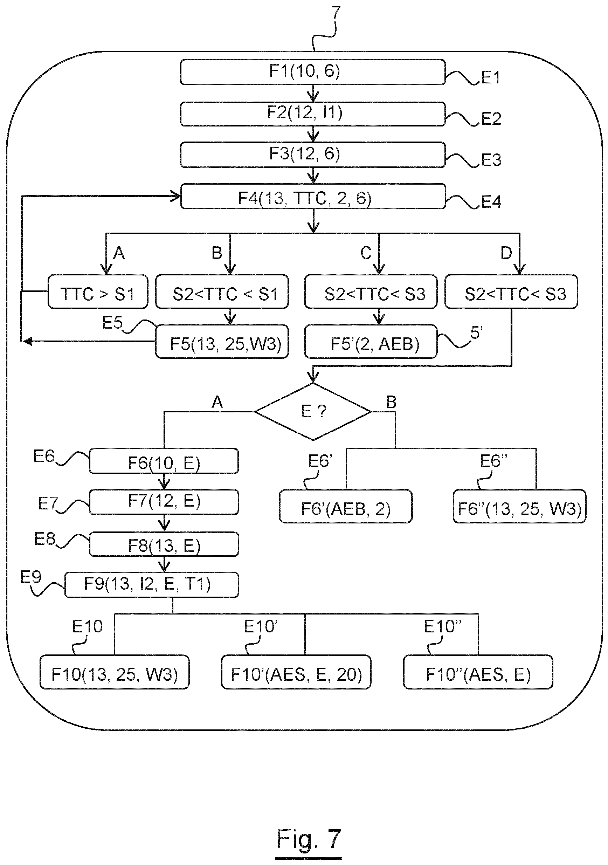

Par ailleurs, le système d'aide à la conduite 1 décrit permet la mise en œuvre d'un procédé d'aide à la conduite de jour 7 tel qu'illustré sur la figure 7, selon un mode de réalisation non limitatif. Selon ce mode de réalisation non limitatif illustré, un seul objet 6 est détecté. Selon ce mode de réalisation non limitatif illustré, ledit au moins un dispositif lumineux 11 est un projecteur. Selon ce mode de réalisation non limitatif, les deux projecteurs 11 n'éclairent pas un objet 6 détecté. Selon ce mode de réalisation non limitatif illustré, les images I2 sont des images affichées sur un écran HUD. Selon ce mode de réalisation non limitatif, le temps avant collision TTC est pris en compte pour la recherche et la sélection d'un espace libre E.

Le procédé d'aide à la conduite de nuit 5 est maintenant décrit ci-après. Il comprend les étapes suivantes, tel qu'illustré sur la figure 6. On notera que certaines étapes sont réalisées en parallèle.

Dans une étape E1) illustrée F1(10, 6), le capteur 10 détecte la présence d'un objet 6 dans l'environnement extérieur du véhicule automobile 2. Le capteur 10 détecte ainsi l'objet 6 et le classifie. Dans l'exemple non limitatif illustré, il détecte un piéton 6a qui se trouve sur sa trajectoire courante T0. Si aucun objet 6 n'est détecté, le véhicule automobile 2 continue de rouler selon sa trajectoire courante T0. On notera que l'étape de détection s'effectue de façon continue.

Dans une étape E2) illustrée F2(11, 6), les deux projecteurs 11 éclairent l'objet 6 détecté. Ils éclairent ainsi le piéton 6a. Cela permet au conducteur de bien voir le piéton 6a devant lui, notamment de nuit. Cela va aider également la caméra 12 pour la détection des objets 6 et pour leur classification. On notera que les deux projecteurs 11 sont activés de sortent à éclairer l'objet 6 ainsi détecté. L'activation se fait par l'unité de contrôle électronique 13 dans un mode de réalisation non limitatif.

Dans une étape E3) illustrée F3(12, I1), la caméra 12 acquiert des images I1 de l'environnement extérieur du véhicule automobile 2. Dans l'exemple non limitatif illustré sur la figure 2b, les images I1 acquises sont des images du piéton 6a, mais également du marquage au sol 6b de la route 4 et des arbres 6c qui bordent la route 4. On notera que l'étape d'acquisition s'effectue de façon continue. Donc, en même temps que l'étape E1, E2 et les étapes suivantes.

Dans une étape E4) illustrée F4(12, 6), la caméra 12 détecte la présence dudit objet 6 dans l'environnement extérieur du véhicule 2. La caméra 12 détecte ainsi l'objet 6 et le classifie. Ainsi, dans l'exemple non limitatif illustré, à partir de ses images I1 elle détecte également le piéton 6a. On notera que la caméra 12 peut détecter certains objets 6 de nuit sans éclairage. Par exemple la nuit elle peut détecter les feux arrières d'un véhicule se situant devant le véhicule concerné et identifier ainsi ce véhicule comme étant un véhicule. On notera que cette étape commence avant l'éclairage de l'objet 6 par les projecteurs 11 et continue après l'éclairage. Ainsi, la détection et la classification de la présence du piéton 6a est facilitée par le fait qu'il est éclairé par les deux projecteurs 11, notamment de nuit. On notera que l'étape de détection s'effectue de façon continue.

Dans une étape E5) illustrée F5(13, TTC, 2, 6), l'unité de contrôle électronique 13 calcule le temps avant collision TTC entre le véhicule automobile 2 et l'objet 6 détecté. Si le temps avant collision TTC est supérieur à un premier seuil S1 (branche A), on revient à l'étape E5. Si le temps avant collision TTC est compris entre le premier seuil S1 et le deuxième seuil S2 (branche B), dans une étape E6) illustrée F6(13, 25, W3) l'unité de contrôle électronique 13 active un signal d'alerte W3 sur une interface homme-machine 25 pour prévenir le conducteur qu'il doit faire attention au piéton 6a et on revient à l'étape E5. Elle peut également modifier la couleur du faisceau lumineux d'un ou plusieurs modules lumineux 26 disposés dans l'habitacle 21 dudit véhicule automobile 2 comme décrit précédemment. Si le temps avant collision TTC est compris entre le deuxième seuil S2 et le troisième seuil S3 (branche C), dans une étape E6') illustrée F6'(2, AEB) le dispositif AEB est activé pour freiner le véhicule automobile 2 et on revient à l'étape E5. Si le temps avant collision TTC est inférieur ou égal à un troisième seuil S3 (branche D), alors les étapes suivantes sont exécutées.

S'il existe au moins un espace libre E autour du véhicule automobile 2 alors (branche A), dans une étape E7) illustrée F7(10, E), le capteur 10 détecte au moins un espace libre E autour dudit véhicule automobile 2, à savoir un espace libre E dans l'environnement extérieur du véhicule automobile 2. Dans l'exemple non limitatif illustré sur la figure 3b, il détecte deux espaces libres Ea et Eb devant le véhicule automobile 2, à savoir un Ea à gauche et un Eb tout à droite en dehors de la route 4, ici route sur laquelle roule le véhicule automobile 2.

Dans une étape E8) illustrée F8(12, E), la caméra 12 détecte ledit au moins espace libre E à partir desdites images I1 acquises. Dans l'exemple non limitatif, la caméra 12 détecte également les deux espaces libres Ea et Eb devant le véhicule automobile 2. Afin d'aider la caméra 12 à mieux détecter un espace libre E, dans un mode de réalisation non limitatif, dans un étape E8'), illustrée F8'(11, S) les projecteurs 11 éclairent l'environnement extérieur dans lequel se trouve le piéton 6a, à savoir la scène S (illustrée sur la figure 3b) dans laquelle il se trouve, sans éblouir si possible les véhicules, cyclistes, piétons autour. On notera que l'intensité de l'éclairage est différent de celui qui éclaire juste le piéton 6a.

Dans une étape E9) illustrée F9(11, E), au moins un des projecteurs 11 éclaire ledit au moins un espace libre E trouvé. Il peut continuer d'éclairer le piéton 6a ou non. Dans l'exemple non limitatif illustré sur la figure 3a, le projecteur éclaire les espaces libres Ea et Eb mais n'éclaire ainsi plus le piéton 6a. Ainsi, cela permet au conducteur de voir, de nuit, les espaces libres E trouvés et de savoir s'il a une alternative à la trajectoire courante T0 qui le dirige vers le piéton 6a, à savoir une nouvelle trajectoire T1 qui lui permet d'éviter le piéton 6a et donc l'accident. On notera que s'il existe deux espaces libres Ea, Eb, un seul projecteur 11 peut éclairer les deux espaces libres Ea, Eb, tel que dans un exemple non limitatif un projecteur 11 comprenant un module matriciel de 4000 pixels.

Dans une étape E10) illustrée F10(13, E), l'unité de contrôle électronique 13 sélectionne un espace libre E trouvé, qui a été trouvé par ledit capteur 10 et/ou ladite caméra 12. Dans l'exemple non limitatif, l'unité de contrôle électronique 13 détermine quel est l'espace libre E parmi les deux espaces libres Ea et Eb trouvés le plus approprié vers lequel le véhicule automobile 2 doit se diriger. Ainsi, il sélectionne l'espace libre Ea puisque l'autre espace libre Eb est en dehors de la route 4 et n'est pas assez large pour que le véhicule automobile 2 s'y engage comme décrit précédemment.

Dans une étape E11) illustrée F11(13, I2, E, T1), l'unité de contrôle électronique 13 active la visualisation d'images I2 au niveau de l'espace libre E sélectionné de sorte à indiquer une nouvelle trajectoire T1 pour ledit véhicule automobile 2. Dans le mode de réalisation non limitatif décrit, le projecteur qui éclaire l'espace libre Ea sélectionné est activé par l'unité de contrôle électronique 13. Ainsi, il projette sur la route 4, ici sur laquelle roule ledit véhicule automobile 2, des images lumineuses I2 au niveau de l'espace libre Ea sélectionné pour indiquer la nouvelle trajectoire T1 à suivre pour ledit véhicule 2. Dans l'exemple non limitatif illustré sur la figure 4a, une flèche en trait discontinus est projetée au sol. Cela permet au conducteur de bien repérer la nouvelle trajectoire T1.

Si le véhicule automobile 2 est un véhicule non autonome, dans une étape E12 illustrée F12(13, 25, W3), l'unité de contrôle électronique 13 transmet un signal W3 à une interface homme-machine 25 dudit véhicule automobile 2 pour alerter le conducteur qu'il doit changer de trajectoire.

Si le véhicule automobile 2 est un véhicule semi-autonome, dans une étape E12' illustrée F12'(AES, E, A, 20), le dispositif AES relaye un mouvement du véhicule automobile 2 en direction dudit espace libre E sélectionné, mouvement initié par une action A d'un conducteur dudit véhicule automobile 2 sur son volant 20. On peut également prévoir en parallèle que l'unité de contrôle électronique 13 transmette un signal W3 à une interface homme-machine 25 dudit véhicule automobile 2 pour alerter le conducteur qu'il doit changer de trajectoire et initier le mouvement sur le volant 20.

Si le véhicule automobile 2 est un véhicule autonome, dans une étape E12" illustrée F12"(AES, E), le dispositif AES fait bouger le véhicule automobile 2 en direction dudit espace libre E sélectionné selon la trajectoire T1, sans l'intervention du conducteur. On peut également prévoir en parallèle que l'unité de contrôle électronique 13 transmette un signal W3 à une interface homme-machine 25 dudit véhicule automobile 2 pour alerter le conducteur du changement de trajectoire.

On notera que s'il n'existe aucun espace libre E autour du véhicule automobile 2 (le capteur 10 ne détecte aucun espace libre E, alors (branche B), dans le cas d'un véhicule automobile 2 autonome ou semi-autonome, dans une étape E7' illustrée F7'(AEB, 2), le dispositif AEB freine automatiquement le véhicule automobile 2 sans l'intervention du conducteur. Dans le cas d'un véhicule automobile 2 non autonome, dans une étape E7" illustrée F7"(13, 25, W3), l'unité de contrôle électronique 13 transmet un signal W3 à une interface homme-machine 25 dudit véhicule automobile 2 pour alerter le conducteur qu'il doit freiner d'urgence.

Ainsi, le procédé d'aide à la conduite de nuit 5 permet d'éviter le piéton 6a, notamment lorsqu'un espace libre E est trouvé et sélectionné. Il permet ainsi d'éviter un accident. On notera que l'issue est la même si l'objet 6 détecté est un arbre (ou tout autre objet fixe) se trouvant dans le champ de vision du capteur 10 et dans la trajectoire T0 du véhicule automobile 2.

Le procédé d'aide à la conduite de jour 7 est maintenant décrit ci-après. Il comprend les étapes suivantes, tel qu'illustré sur la figure 7. On notera que certaines étapes sont réalisées en parallèle.

Dans une étape E1) illustrée F1(10, 6), le capteur 10 détecte la présence d'un objet 6 dans l'environnement extérieur du véhicule automobile 2. Le capteur 10 détecte ainsi l'objet 6 et le classifie. Dans l'exemple non limitatif illustré, il détecte un piéton 6a qui se trouve sur sa trajectoire courante T0. Si aucun objet 6 n'est détecté, le véhicule automobile 2 continue de rouler selon sa trajectoire courante T0. On notera que l'étape de détection s'effectue de façon continue.

Dans une étape E2) illustrée F2(12, I1), la caméra 12 acquiert des images I1 de l'environnement extérieur du véhicule automobile 2. Dans l'exemple non limitatif illustré sur la figure 2b, les images I1 acquises sont des images du piéton 6a, mais également du marquage au sol 6b de la route 4 et des arbres 6c qui bordent la route 4.. On notera que l'étape d'acquisition s'effectue de façon continue. Donc, en même temps que l'étape E1 et les étapes suivantes.

Dans une étape E3) illustrée F3(12, 6), la caméra 12 détecte la présence dudit objet 6 dans l'environnement extérieur du véhicule 2. La caméra 12 détecte ainsi l'objet 6 et le classifie. Ainsi, dans l'exemple non limitatif illustré, à partir de ses images I1 elle détecte également le piéton 6a. On notera que l'étape de détection s'effectue de façon continue.

Dans une étape E4) illustrée F4(13, TTC, 2, 6), l'unité de contrôle électronique 13 calcule le temps avant collision TTC entre le véhicule automobile 2 et l'objet 6 détecté. Si le temps avant collision TTC est supérieur à un premier seuil S1 (branche A), on revient à l'étape E4. Si le temps avant collision TTC est compris entre le premier seuil S1 et le deuxième seuil S2 (branche B), dans une étape E5) illustrée F5(13, 25, W3) étape l'unité de contrôle électronique 13 active un signal d'alerte W3 sur une interface homme-machine 25 pour prévenir le conducteur qu'il doit faire attention au piéton 6a et on revient à l'étape E4. Le message d'alerte W3 peut indiquer le piéton 6a sur un écran HUD. Dans un autre mode de réalisation non limitatif, elle peut également modifier la couleur d'une zone du faisceau lumineux d'un ou plusieurs modules lumineux 26 disposés dans l'habitacle 21 (sur les portières ou sur le tableau de bord) dudit véhicule automobile 2 pour prévenir du danger, la zone représentant le côté où se trouve le piéton 6a dans cet exemple non limitatif. Dans un autre mode de réalisation non limitatif, l'unité de contrôle électronique 13 peut commander l'éclairage des pieds du piéton 6a d'une couleur différente. Si le temps avant collision TTC est compris entre le deuxième seuil S2 et le troisième seuil S3 (branche C), dans une étape E5') illustrée F5'(2, AEB) le dispositif AEB est activé pour freiner le véhicule automobile 2 et on revient à l'étape E4. Si le temps avant collision TTC est supérieur ou égal à un troisième seuil S3 (branche D), alors les étapes suivantes sont exécutées.

S'il existe au moins un espace libre E autour du véhicule automobile 2 alors (branche A), dans une étape E6) illustrée F6(10, E), le capteur 10 détecte au moins un espace libre E autour dudit véhicule automobile 2, à savoir un espace libre E dans l'environnement extérieur du véhicule automobile 2. Dans l'exemple non limitatif illustré sur la figure 3b, il détecte deux espaces libres Ea et Eb devant le véhicule automobile 2, à savoir un Ea à gauche et un Eb tout à droite en dehors de la route 4, ici route sur laquelle roule le véhicule automobile 2.

Dans une étape E7) illustrée F7(12, E), la caméra 12 détecte ledit au moins espace libre E à partir desdites images I1 acquises. Dans l'exemple non limitatif, la caméra 12 détecte également les deux espaces libres Ea et Eb devant le véhicule automobile 2.

Dans une étape E8) illustrée F8(13, E), l'unité de contrôle électronique 13 sélectionne un espace libre E trouvé, qui a été trouvé par le capteur 10 et/ou ladite caméra 12. Dans l'exemple non limitatif, l'unité de contrôle électronique 13 détermine quel est l'espace libre E parmi les deux espaces libres Ea et Eb trouvés le plus approprié vers lequel le véhicule automobile 2 doit se diriger. Ainsi, il sélectionne l'espace libre Ea puisque l'autre espace libre Eb est en dehors de la route 4 et n'est pas assez large pour que le véhicule automobile 2 s'y engage comme décrit précédemment.

Dans une étape E9) illustrée F9(13, I2, E, T1), l'unité de contrôle électronique 13 active la visualisation d'images I2 au niveau de l'espace libre E sélectionné de sorte à indiquer une nouvelle trajectoire T1 pour ledit véhicule automobile 2. Dans le mode de réalisation non limitatif décrit, elle active l'affichage des images I2 sur l'écran HUD pour indiquer une trajectoire T1 à suivre pour ledit véhicule automobile 2. Dans l'exemple non limitatif illustré sur la figure 4b, une flèche en trait discontinus est affichée sur l'écran HUD. Cela permet au conducteur de bien repérer la nouvelle trajectoire T1. Au travers de l'écran HUD, le conducteur peut voir la flèche qui indique la trajectoire T1 à suivre, la flèche se situant au niveau de l'espace libre Ea (vu au travers du pare-brise 23) qui a été sélectionné dans l'exemple non limitatif pris.

Si le véhicule automobile 2 est un véhicule non autonome, dans une étape E10 illustrée F10(13, 25, W3), l'unité de contrôle électronique 13 transmet un signal W3 à une interface homme-machine 25 dudit véhicule automobile 2 pour alerter le conducteur qu'il doit changer de trajectoire.

Si le véhicule automobile 2 est un véhicule semi-autonome, dans une étape E10' illustrée F10'(AES, E, A, 20), le dispositif AES relaye un mouvement du véhicule automobile 2 en direction dudit espace libre E sélectionné, mouvement initié par une action A d'un conducteur dudit véhicule automobile 2 sur son volant 20. On peut également prévoir en parallèle que l'unité de contrôle électronique 13 transmette un signal W3 à une interface homme-machine 25 dudit véhicule automobile 2 pour alerter le conducteur qu'il doit changer de trajectoire et initier le mouvement sur le volant 20.

Si le véhicule automobile 2 est un véhicule autonome, dans une étape E10" illustrée F10"(AES, E), le dispositif AES fait bouger le véhicule automobile 2 en direction dudit espace libre E sélectionné selon la trajectoire T1, sans l'intervention du conducteur. On peut également prévoir en parallèle que l'unité de contrôle électronique 13 transmette un signal W3 à une interface homme-machine 25 dudit véhicule automobile 2 pour alerter le conducteur du changement de trajectoire.

On notera que s'il n'existe aucun espace libre E autour du véhicule automobile 2 (le capteur 10 ne détecte aucun espace libre E, alors (branche B), dans le cas d'un véhicule automobile 2 autonome ou semi-autonome, dans une étape E6' illustrée F6'(AEB, 2), le dispositif AEB freine automatiquement le véhicule automobile 2 sans l'intervention du conducteur. Dans le cas d'un véhicule automobile 2 non autonome, dans une étape E6" illustrée F6"(13, 25, W3), l'unité de contrôle électronique 13 transmet un signal W3 à une interface homme-machine 25 dudit véhicule automobile 2 pour alerter le conducteur qu'il doit freiner d'urgence.

On notera que dans un mode de réalisation non limitatif (non illustré) le procédé d'aide à la conduite de jour 7 peut en outre comprendre l'éclairage dudit au moins un objet détecté 6 par un projecteur 11, et l'éclairage dudit au moins un espace libre E détecté par un projecteur 11 comme dans le cas du procédé d'aide à la conduite de nuit 5.

Bien entendu la description de l'invention n'est pas limitée aux modes de réalisation décrits ci-dessus et au domaine décrit ci-dessus. Ainsi, dans un autre mode de réalisation non limitatif, ledit au moins un dispositif lumineux 11 est un feu arrière de véhicule 2. Dans ce cas, la caméra 12 est disposée à l'arrière du véhicule 2 et est configurée pour acquérir des images I1 de l'environnement extérieur qui se trouve à l'arrière et sur les côtés du véhicule 2. Ce mode de réalisation non limitatif est intéressant lorsque le véhicule 2 fait une marche arrière par exemple. On peut noter qu'on peut avoir une combinaison d'une détection d'un objet 6 à l'avant et sur les côtés, et à l'arrière et sur les côtés. Dans ce cas, on a une caméra 12 et un capteur 10 à l'avant, et une caméra 12 et un capteur 10 à l'arrière du véhicule 2. Ainsi, dans un autre mode de réalisation non limitatif, le système d'aide à la conduite 1 comprend plusieurs capteurs 10 et plusieurs caméras 12. Ainsi, dans un autre mode de réalisation non limitatif, les images lumineuses I2 sont projetées par un dispositif lumineux 11 différent de celui qui éclaire l'objet 6 détecté. Ainsi, dans un autre mode de réalisation non limitatif, les images lumineuses I2 projetées sur ladite route 4 pour indiquer la nouvelle trajectoire T1 à suivre pour le véhicule 2 représentent une pluralité de lignes correspondantes à ladite trajectoire T1 à suivre. Ainsi, dans un autre mode de réalisation non limitatif, si le capteur 10 est ASIL D ou si la réglementation au niveau sécurité est moins sévère, l'unité de contrôle électronique 13 peut se baser uniquement sur la détection de l'objet 6 par le capteur 10 pour réaliser les fonctions f6 et f15. De même, dans un autre mode de réalisation non limitatif, si la caméra 12 est défectueuse, l'unité de contrôle électronique 13 peut se baser uniquement sur la détection de l'espace libre E par le capteur 10 pour réaliser la fonction f7. De même, dans un autre mode de réalisation non limitatif, si la caméra 12 est défectueuse le dispositif lumineux 11 peut se baser uniquement sur la détection de l'objet 6 par le capteur 10 pour réaliser la fonction f8. Ainsi, dans un autre mode de réalisation non limitatif, si la réglementation au niveau sécurité est moins sévère, l'unité de contrôle électronique 13 peut se baser uniquement sur la détection de l'objet 6 par la caméra 12 pour réaliser les fonctions f6 et f15. De même, dans un autre mode de réalisation non limitatif, si le capteur 10 est défectueux, l'unité de contrôle électronique 13 peut se baser uniquement sur la détection de l'espace libre E par la caméra 12 pour réaliser la fonction f7. De même, dans un autre mode de réalisation non limitatif, si le capteur 10 est défectueux le dispositif lumineux 11 peut se baser uniquement sur la détection de l'objet 6 par la caméra 12 pour réaliser la fonction f8.

Ainsi, l'invention décrite présente notamment les avantages suivants :
- elle permet d'éviter une collision avec un objet 6 qui est un obstacle, dans le cas où la vitesse du véhicule 2 est trop grande pour pouvoir freiner à temps,
- elle permet d'éclairer l'espace libre E trouvé pour orienter le conducteur vers la bonne trajectoire T1,
- elle permet d'aider efficacement la conduite de jour comme de nuit,
- elle est applicable à tout type de véhicule 2, qu'il soit autonome, semi-autonome ou non autonome.

## Revendications

1. Système d'aide à la conduite (1) d'un véhicule (2), ledit système d'aide à la conduite (1) comprenant :
- au moins un capteur (10) configuré pour détecter la présence d'un objet (6) dans un environnement extérieur du véhicule (2),
- au moins une caméra (12) configurée pour acquérir des images (I1) de l'environnement extérieur du véhicule (2) et détecter la présence dudit objet (6) dans l'environnement extérieur du véhicule (2),
- ledit au moins un capteur (10) étant en outre configuré pour détecter au moins un espace libre (E) dans l'environnement extérieur dudit véhicule (2),
- ladite au moins une caméra (12) étant en outre configurée pour, à partir desdites images (I1) acquises, détecter au moins un espace libre (E),
- ledit système d'aide à la conduite (1) omprenant en outre une unité de contrôle électronique (13) configurée pour sélectionner un espace libre (E) trouvé par ledit au moins un capteur (10) et/ou ladite au moins une caméra (12),
- ladite unité de contrôle électronique (13) étant en outre configurée pour activer la visualisation d'images (I2) au niveau de l'espace libre (E) sélectionné de sorte à indiquer une nouvelle trajectoire (T1) à suivre pour ledit véhicule (2)
**caractérisé en ce que**
- ladite unité de contrôle électronique (13) est en outre configurée pour calculer un temps avant collision (TTC) avec ledit objet (6) détecté
- et **en ce que** ledit au moins un capteur (10) et ladite au moins une caméra (12) sont configurés pour détecter au moins un espace libre (E) dans l'environnement extérieur dudit véhicule (2) si ledit temps avant collision (TTC) est inférieur à un seuil (S3), et ladite unité de contrôle électronique (13) est configurée pour activer la visualisation d'images (I2) au niveau de l'espace libre (E) sélectionné de sorte à indiquer une nouvelle trajectoire (T1) à suivre pour ledit véhicule (2) si ledit temps avant collision (TTC) est inférieur audit seuil (S3).

2. Système d'aide à la conduite (1) selon la revendication 1, selon lequel ledit système d'aide à la conduite comprend en outre :
- au moins un dispositif lumineux (11) configuré pour éclairer ledit objet (6) détecté,
- au moins un dispositif lumineux (11) configuré pour éclairer ledit au moins un espace libre (E) sélectionné.

3. Système d'aide à la conduite (1) selon la revendication 2, selon lequel ledit au moins un dispositif lumineux (11) est en outre configuré pour éclairer la scène (S) dans laquelle se trouve ledit objet (6) détecté.

4. Système d'aide à la conduite (1) selon l'une quelconque des revendications précédentes 2 ou 3, selon lequel ledit au moins un dispositif lumineux (11) est un projecteur.

5. Système d'aide à la conduite (1) selon l'une quelconque des revendications précédentes, selon lequel ladite unité de contrôle électronique (13) est configurée pour sélectionner un espace libre (E) trouvé par ledit capteur (10) et par ladite caméra (12).

6. Système d'aide à la conduite (1) selon l'une quelconque des revendications précédentes, selon lequel lesdites images (I2) sont des images lumineuses projetées sur une route (4) comprenant ledit espace libre (E) sélectionné.

7. Système d'aide à la conduite (1) selon l'une quelconque des revendications 1 à 5, selon lequel lesdites images (I2) sont des images affichées sur une interface homme-machine (25).

8. Système d'aide à la conduite (1) selon l'une quelconque des revendications précédentes, selon lequel ledit véhicule (2) est un véhicule autonome.

9. Système d'aide à la conduite (1) selon la revendication précédente, selon lequel ledit système d'aide à la conduite (1) comprend en outre un dispositif de commande d'urgence de direction (AES) du véhicule (2) configuré pour mouvoir ledit véhicule (2) en direction dudit espace libre (E) sélectionné.

10. Système d'aide à la conduite (1) selon l'une quelconque des revendications précédentes 1 à 7, selon lequel ledit véhicule (2) est un véhicule semi-autonome.

11. Système d'aide à la conduite (1) selon la revendication précédente, selon lequel ledit système d'aide à la conduite (1) comprend en outre un dispositif de commande d'urgence de la direction (AES) du véhicule (2) configuré pour relayer un mouvement du véhicule (2) en direction dudit espace libre (E) sélectionné, mouvement initié par une action (A) d'un conducteur sur le volant (20) dudit véhicule (2).

12. Système d'aide à la conduite (1) selon l'une quelconque des revendications précédentes 1 à 7, selon lequel ledit véhicule (2) est un véhicule non-autonome.

13. Système d'aide à la conduite (1) selon l'une quelconque des revendications précédentes, selon lequel ladite unité de contrôle électronique (13) est en outre configurée pour transmettre un signal (W3) à une interface homme-machine (25) dudit véhicule (2) et/ou modifier la couleur d'un faisceau lumineux d'au moins un module lumineux (26) disposé dans l'habitacle (21) dudit véhicule (2).

14. Procédé d'aide à la conduite de nuit (5) d'un véhicule (2), ledit procédé d'aide à la conduite de nuit (5) comprenant :
- la détection (E1) par au moins un capteur (10) de la présence d'un objet (6) dans un environnement extérieur du véhicule (2),
- l'éclairage (E2) par au moins un dispositif lumineux (11) dudit objet (6) détecté,
- l'acquisition (E3) par au moins une caméra (12) d'images (I1) de l'environnement extérieur du véhicule (2),
- la détection (E4) par ladite au moins une caméra (12) de la présence dudit objet (6) dans l'environnement extérieur du véhicule (2),
- la détection (E7) par ledit au moins un capteur (10) d'au moins un espace libre (E) autour dudit véhicule (2),
- à partir desdites images (I1) acquises, la détection (E8) par ladite au moins une caméra (12) d'au moins un espace libre (E),
- l'éclairage (E9) par au moins un dispositif lumineux (11) dudit au moins un espace libre (E) trouvé,
- la sélection (E10) par une unité de contrôle électronique (13) dudit au moins un espace libre (E) trouvé par ledit au moins un capteur (10) et/ou par ladite au moins une caméra (12),
- l'activation (E11) par ladite unité de contrôle électronique (13) de la visualisation d'images (I2) au niveau de l'espace libre (E) sélectionné de sorte à indiquer une nouvelle trajectoire (T1) pour ledit véhicule (2)
**caractérisé en ce que** ledit procédé d'aide à la conduite de nuit (5) comprend en outre :
- le calcul d'un temps avant collision (TTC) avec ledit objet (6) détecté par ladite unité de contrôle électronique (13),
- la détection par ledit au moins un capteur (10) et ladite au moins une caméra (12) d'au moins un espace libre (E) dans l'environnement extérieur dudit véhicule (2) si ledit temps avant collision (TTC) est inférieur à un seuil (S3)
- l'activation par ladite unité de contrôle électronique (13) de la visualisation d'images (I2) au niveau de l'espace libre (E) sélectionné de sorte à indiquer une nouvelle trajectoire (T1) à suivre pour ledit véhicule (2) si ledit temps avant collision (TTC) est inférieur audit seuil (S3).

15. Procédé d'aide à la conduite de nuit (5) selon la revendication précédente, selon lequel ledit procédé d'aide à la conduite de nuit (5) comprend en outre l'éclairage par ledit au moins un dispositif lumineux (11) de la scène (S) dans laquelle se trouve ledit objet (6) détecté.

16. Procédé d'aide à la conduite de jour (7) d'un véhicule (2), ledit procédé d'aide à la conduite de jour (7) comprenant :
- la détection (E1) par au moins un capteur (10) de la présence d'un objet (6) dans un environnement extérieur du véhicule (2),
- l'acquisition (E2) par au moins une caméra (12) d'images (I1) de l'environnement extérieur du véhicule (2),
- la détection (E3) par ladite au moins une caméra (12) de la présence dudit objet (6) dans l'environnement extérieur du véhicule (2),
- la détection (E6) par ledit au moins un capteur (10) d'au moins un espace libre (E) autour dudit véhicule (2),
- à partir desdites images (I1) acquises, la détection (E7) par ladite au moins une caméra (12) d'au moins un espace libre (E),
- la sélection (E8) par une unité de contrôle électronique (13) dudit au moins un espace libre (E) trouvé par ledit au moins un capteur (10) et/ou par ladite au moins une caméra (12),
**caractérisé en ce que** ledit procédé d'aide à la conduite de jour (5) comprend en outre :
- le calcul d'un temps avant collision (TTC) avec ledit objet (6) détecté par ladite unité de contrôle électronique (13),
- la détection par ledit au moins un capteur (10) et ladite au moins une caméra (12) d'au moins un espace libre (E) dans l'environnement extérieur dudit véhicule (2) si ledit temps avant collision (TTC) est inférieur à un seuil (S3)
- l'activation par ladite unité de contrôle électronique (13) de la visualisation d'images (I2) au niveau de l'espace libre (E) sélectionné de sorte à indiquer une nouvelle trajectoire (T1) à suivre pour ledit véhicule (2) si ledit temps avant collision (TTC) est inférieur audit seuil (S3).

## Patentansprüche

1. Fahrassistenzsystem (1) für ein Fahrzeug (2), wobei das Fahrassistenzsystem (1) umfasst:
- mindestens einen Sensor (10), der so konfiguriert ist, dass er die Anwesenheit eines Objekts (6) in einer Außenumgebung des Fahrzeugs (2) zu erfassen,
- mindestens eine Kamera (12), die so konfiguriert ist, dass sie Bilder (11) der Außenumgebung des Fahrzeugs (2) aufnimmt und das Vorhandensein des Objekts (6) in der Außenumgebung des Fahrzeugs (2) erkennt,
- wobei der mindestens eine Sensor (10) ferner so konfiguriert ist, dass er mindestens einen freien Raum (E) in der Außenumgebung des Fahrzeugs (2) zu erfassen,
- wobei die mindestens eine Kamera (12) ferner so konfiguriert ist, dass sie mindestens einen freien Raum (E) aus den aufgenommenen Bildern (11) erkennt,
- wobei das Fahrassistenzsystem (1) ferner eine elektronische Steuereinheit (13) umfasst, die so konfiguriert ist, dass sie einen von dem mindestens einen Sensor (10) und/oder der mindestens einen Kamera (12) gefundenen freien Raum (E) auswählt,
wobei die elektronische Steuereinheit (13) ferner so konfiguriert ist, dass sie die Anzeige von Bildern (12) an dem ausgewählten freien Platz (E) aktiviert, um eine neue Bahn (T1) anzuzeigen, der das Fahrzeug (2) folgen soll
**dadurch gekennzeichnet, dass**
- die elektronische Steuereinheit (13) ferner so konfiguriert ist, dass sie eine Zeit bis zur Kollision (TTC) mit dem erfassten Objekt (6) berechnet
- und dass der mindestens eine Sensor (10) und die mindestens eine Kamera (12) so konfiguriert sind, dass sie mindestens einen freien Raum (E) in der Außenumgebung des Fahrzeugs (2) erkennen, wenn
die Zeit bis zur Kollision (TTC) kleiner als ein Schwellenwert (S3) ist, und die elektronische Steuereinheit (13) so konfiguriert ist, dass sie die Anzeige von Bildern (12) an dem ausgewählten freien Raum (E) aktiviert, um eine neue Flugbahn (T1) anzuzeigen, der das Fahrzeug folgen soll
(2) zu folgen ist, wenn die Zeit bis zur Kollision (TTC) kleiner als der Schwellenwert (S3) ist.

2. Fahrassistenzsystem (1) nach Anspruch 1, wobei das Fahrassistenzsystem ferner umfasst:
- mindestens eine Lichtvorrichtung (11), die so konfiguriert ist, dass sie das erkannte Objekt (6) beleuchtet,
- mindestens eine Lichtvorrichtung (11), die so konfiguriert ist, dass sie den mindestens einen ausgewählten freien Raum (E) beleuchtet.

3. Fahrassistenzsystem (1) nach Anspruch 2, wobei die mindestens eine Lichtvorrichtung (11) ferner dazu ausgelegt ist, die Szene (S) zu beleuchten, in der sich das erkannte Objekt (6) befindet.

4. Fahrassistenzsystem (1) nach einem der vorstehenden Ansprüche 2 oder 3, wobei die mindestens eine Lichtvorrichtung (11) ein Projektor ist.

5. Fahrassistenzsystem (1) nach einem der vorstehenden Ansprüche, wobei die elektronische Steuereinheit (13) so konfiguriert ist, dass sie einen von dem Sensor (10) und der Kamera (12) gefundenen freien Raum (E) auswählt.

6. Fahrassistenzsystem (1) nach einem der vorstehenden Ansprüche wobei die Bilder (12) Leuchtbilder sind, die auf eine Straße (4) projiziert werden, die den ausgewählten freien Raum (E) umfasst.

7. Fahrassistenzsystem (1) nach einem der Ansprüche 1 bis 5, wobei die Bilder (12) Bilder sind, die auf einer Mensch-Maschine-Schnittstelle (25) angezeigt werden.

8. Fahrassistenzsystem (1) gemäß einem der vorstehenden Ansprüche wobei das Fahrzeug (2) ein autonomes Fahrzeug ist.

9. Fahrassistenzsystem (1) nach dem vorstehenden Anspruch, wobei das Fahrassistenzsystem (1) femer eine Notlenksteuerung (AES) des Fahrzeugs (2) umfasst, die so konfiguriert ist, dass sie das Fahrzeug (2) in Richtung des ausgewählten freien Raums bewegt. (E) zu bewegen.

10. Ein Fahrassistenzsystem (1) gemäß einem der vorstehenden Ansprüche 1 bis 7, wobei das Fahrzeug (2) ein halbautonomes Fahrzeug ist.

11. Fahrassistenzsystem (1) gemäß dem vorhergehenden Anspruch, wobei das Fahrassistenzsystem (1) ferner eine Notlenksteuerung (AES) für das Fahrzeug (2) umfasst, die so konfiguriert ist, dass sie eine Bewegung des Fahrzeugs (2) in Richtung des ausgewählten freien Raum (E) weiter umfasst, die durch eine Aktion (A) eines Fahrers am Lenkrad (20) des Fahrzeugs (2) ausgelöst wird.

12. Fahrassistenzsystem (1) gemäß einem der vorstehenden Ansprüche 1 bis 7, wobei das Fahrzeug (2) ein nicht autonomes Fahrzeug ist.

13. Fahrassistenzsystem (1) nach einem der vorstehenden Ansprüche wobei die elektronische Steuereinheit (13) ferner so konfiguriert ist, dass sie ein Signal (W3) an eine Mensch-Maschine-Schnittstelle (25) des Fahrzeugs (2) überträgt und/oder die Farbe eines Lichtstrahls mindestens eines Lichtmoduls (26) zu ändern, das im Fahrgastraum (21) des Fahrzeugs (2) angeordnet ist.

14. Verfahren zur Unterstützung des Nachtfahrens (5) eines Fahrzeugs (2), wobei das Verfahren zur Unterstützung des Nachtfahrens (5) umfasst:
- Erfassen (E1) der Anwesenheit eines Objekts (6) in einer Umgebung außerhalb des Fahrzeugs (2) durch mindestens einen Sensor (10),
- Beleuchten (E2) des erkannten Objekts (6) durch mindestens eine Lichtvorrichtung (11),
- Erfassen (E3) von Bildern (11) der Außenumgebung des Fahrzeugs (2) durch mindestens eine Kamera (12),
- Erfassen (E4) der Anwesenheit des Objekts (6) in der Außenumgebung des Fahrzeugs (2) durch die mindestens eine Kamera (12),
- Erfassen (E7) mindestens eines freien Raums (E) um das Fahrzeug (2) herum durch den mindestens einen Sensor (10),
- auf der Grundlage der aufgenommenen Bilder (11) Erfassung (E8) mindestens eines freien Raums (E) durch die mindestens eine Kamera (12),
- Beleuchtung (E9) des mindestens einen freien Raums (E) durch mindestens eine Beleuchtungseinrichtung (11),
- Auswahl (E10) des mindestens einen freien Raums (E), der von dem mindestens einen Sensor (10) und/oder der mindestens einen Kamera (12) gefunden wurde, durch eine elektronische Steuereinheit (13),
- Aktivierung (E11) der Anzeige von Bildern (12) an dem ausgewählten freien Raum (E) durch die elektronische Steuereinheit (13), um eine neue Fahrbahn (T1) für das Fahrzeug (2) anzuzeigen **dadurch gekennzeichnet, dass** das Verfahren zur Unterstützung beim Nachtfahren (5) ferner umfasst:
- Berechnen einer Zeit bis zur Kollision (TTC) mit dem von der elektronischen Steuereinheit (13) erkannten Objekt (6)
- Erfassung mindestens eines freien Raums (E) in der Außenumgebung des Fahrzeugs (2) durch den mindestens einen Sensor (10) und die mindestens eine Kamera (12), wenn die Zeit bis zur Kollision (TTC) unter einem Schwellenwert (S3) liegt
- Aktivierung der Anzeige von Bildern (12) durch die elektronische Steuereinheit (13) in dem ausgewählten freien Raum (E), um eine neue Bahn (T1) anzuzeigen, der das Fahrzeug (2) folgen soll, wenn die Zeit bis zur Kollision (TTC) kleiner als der Schwellenwert (S3) ist.

15. Verfahren zur Unterstützung beim Nachtfahren (5) gemäß dem vorherigen Anspruch, wobei das Verfahren zur Unterstützung beim Nachtfahren (5) ferner das Beleuchten der Szene (S), in der sich das erkannte Objekt (6) befindet, durch die mindestens eine Lichtvorrichtung (11) umfasst.

16. Verfahren zur Unterstützung des Tagesfahrens (7) eines Fahrzeugs (2), wobei das Verfahren zur Unterstützung des Tagesfahrens (7) umfasst:
- Erfassen (E1) der Anwesenheit eines Objekts (6) in einer Umgebung außerhalb des Fahrzeugs (2) durch mindestens einen Sensor (10),
- Erfassen (E2) von Bildern (11) der Außenumgebung des Fahrzeugs (2) durch mindestens eine Kamera (12),
- Erfassen (E3) der Anwesenheit des Objekts (6) in der Außenumgebung des Fahrzeugs (2) durch die mindestens eine Kamera (12),
- Erfassen (E6) mindestens eines freien Raums (E) um das Fahrzeug (2) herum durch den mindestens einen Sensor (10),
- Erkennung (E7) mindestens eines freien Raums (E) durch die mindestens eine Kamera (12) anhand der aufgenommenen Bilder (11),
- Auswahl (E8) des mindestens einen freien Raums (E) durch eine elektronische Steuereinheit (13) durch den mindestens einen Sensor (10) und/oder durch die mindestens eine Kamera (12) gefundenen mindestens einen freien Raum (E), **dadurch gekennzeichnet, dass** das Verfahren (5) zur Unterstützung beim Fahren bei Tag ferner umfasst
- die Berechnung einer Zeit bis zur Kollision (TTC) mit dem von der elektronischen Steuereinheit (13) erkannten Objekt (6),
- die Erkennung durch den mindestens einen Sensor (10) und die mindestens eine Kamera (12) von mindestens einem freien Platzes (E) in der Außenumgebung des Fahrzeugs (2), wenn die Zeit bis zur Kollision (TTC) unter einem Schwellenwert (S3) liegt
- Aktivierung der Anzeige von Bildern (12) an dem ausgewählten freien Raum (E) durch die elektronische Steuereinheit (13), um eine neue Flugbahn (T1) anzuzeigen, der das Fahrzeug (2) folgen soll, wenn die Zeit bis zur Kollision (TTC) unter dem Schwellenwert (S3) liegt.

## Claims

1. A driving assistance system (1) for a vehicle (2), said driving assistance system
(1) comprising:
- at least one sensor (10) configured to detect the presence of an object (6) in a external environment of the vehicle (2),
• at least one camera (12) configured to acquire images (11) of the external environment of the vehicle (2) and detect the presence of said object (6) in the external environment of the vehicle (2),
• said at least one sensor (10) being further configured to detect at least one free space (E) in the external environment of said vehicle (2),
• said at least one camera (12) being further configured to detect at least one free space (E) from said acquired images (11),
• said driving assistance system (1) further comprising an electronic control unit
(13) configured to select a free space (E) found by said at least one sensor (10) and/or said at least one camera (12),
- said electronic control unit (13) being further configured to activate the display of images (12) at the selected free space (E) so as to indicate a new trajectory (T1) to be followed by said vehicle (2)
**characterized in that**
• said electronic control unit (13) is further configured to calculate a time to collision (TTC) with said detected object (6)
• and **in that** said at least one sensor (10) and said at least one camera (12) are configured to detect at least one free space (E) in the external environment of said vehicle (2) if
said time to collision (TTC) is less than a threshold (S3), and said electronic control unit (13) is configured to activate the display of images (12) at the selected free space (E) so as to indicate a new trajectory (T1) to be followed by said vehicle
(2) if said time before collision (TTC) is less than said threshold (S3).

2. Driving assistance system (1) according to claim 1, wherein said driving assistance system further comprises:
• at least one light device (11) configured to illuminate said detected object (6),
• at least one light device (11) configured to illuminate said at least one selected free space (E).

3. Driving assistance system (1) according to claim 2, wherein said at least one light device (11) is further configured to illuminate the scene (S) in which said detected object (6) is located.

4. A driving assistance system (1) according to any of the preceding claims 2, or 3, wherein said at least one light device (11) is a projector.

5. A driving assistance system (1) according to any of the preceding claims, wherein said electronic control unit (13) is configured to select a free space (E) found by said sensor (10) and said camera (12).

6. A driving assistance system (1) according to any of the preceding claims
wherein said images (12) are luminous images projected onto a road (4) including said selected free space (E).

7. A driving assistance system (1) according to any of claims 1 to 5, wherein said images (12) are images displayed on a human-machine interface (25).

8. A driving assistance system (1) according to any of the preceding claims
wherein said vehicle (2) is an autonomous vehicle.

9. A driving assistance system (1) according to the preceding claim, wherein said driving assistance system (1) further comprises an emergency steering control device (AES) of the vehicle (2) configured to move said vehicle (2) toward said selected free space (E).

10. A driving assistance system (1) according to any of the preceding claims 1 to 7, wherein said vehicle (2) is a semi-autonomous vehicle.

11. Driving assistance system (1) according to the previous claim, wherein said driving assistance system (1) further comprises an emergency steering control device (AES) for the vehicle (2) configured to relay a movement of the vehicle (2) towards said selected free space (E), initiated by an action (A) of a driver on the steering wheel (20) of said vehicle (2).

12. Driving assistance system (1) according to any of the preceding claims 1 to 7, wherein said vehicle (2) is a non-autonomous vehicle.

13. Driving assistance system (1) according to any of the preceding claims
wherein said electronic control unit (13) is further configured to transmit a signal (W3) to a human-machine interface (25) of said vehicle (2) and/or modify the color of a light beam of at least one light module (26) disposed in the passenger compartment (21) of said vehicle (2).

14. Method for assisting nighttime driving (5) of a vehicle (2), said method for assisting nighttime driving (5) comprising:
- detecting (E1) by at least one sensor (10) the presence of an object (6) in an environment outside the vehicle (2),
• illuminating (E2) said detected object (6) by at least one light device (11),
• the acquisition (E3) by at least one camera (12) of images (11) of the external environment of the vehicle (2),
- detection (E4) by said at least one camera (12) of the presence of said object (6) in the external environment of the vehicle (2),
- detection (E7) by said at least one sensor (10) of at least one free space (E) around said vehicle (2),
- based on said acquired images (11), detection (E8) by said at least one camera (12) of at least one free space (E),
• illuminating (E9) said at least one free space (E) found by at least one light device (11),
• selection (E10) by an electronic control unit (13) of said at least one free space (E) found by said at least one sensor (10) and/or by said at least one camera (12),
- activation (E11) by said electronic control unit (13) of the display of images (12) at the selected free space (E) so as to indicate a new trajectory (T1) for said vehicle (2)
**characterized in that** said night driving assistance method (5) further comprises:
- calculating a time to collision (TTC) with said object (6) detected by said electronic control unit (13)
- detection by said at least one sensor (10) and said at least one camera (12) of at least one free space (E) in the external environment of said vehicle (2) if said time before collision (TTC) is less than a threshold (S3)
- Activation by said electronic control unit (13) of the display of images (12) at the selected free space (E) so as to indicate a new trajectory (T1) to be followed by said vehicle (2) if said time before collision (TTC) is less than said threshold (S3).

15. Night driving assistance method (5) according to the previous claim, wherein said night driving assistance method (5) further comprises illuminating the scene (S) in which said detected object (6) is located by said at least one light device (11).

16. Method for assisting daytime driving (7) of a vehicle (2), said method for assisting daytime driving (7) comprising:
- detection (E1) by at least one sensor (10) of the presence of an object (6) in an environment outside the vehicle (2),
- acquiring (E2) images (11) of the external environment of the vehicle (2) by at least one camera (12),
- detection (E3) by said at least one camera (12) of the presence of said object (6) in the external environment of the vehicle (2),
- detection (E6) by said at least one sensor (10) of at least one free space (E) around said vehicle (2),
• from said acquired images (11), detection (E7) by said at least one camera (12) of at least one free space (E),
• the selection (E8) by an electronic control unit (13) of said at least one free space (E) found
by said at least one sensor (10) and/or by said at least one camera (12), **characterized in that** said daytime driving assistance method (5) further comprises
- the calculation of a time before collision (TTC) with said object (6) detected by said electronic control unit (13),
- the detection by said at least one sensor (10) and said at least one camera (12) of at least one free space (E) in the external environment of said vehicle (2) if said time to collision (TTC) is less than a threshold (S3)
- activation by said electronic control unit (13) of the display of images (12) at the selected free space (E) so as to indicate a new trajectory (T1) to be followed by said vehicle (2) if said time to collision (TTC) is less than said threshold (S3).
